# EUROPEAN PATENT APPLICATION

(11) **EP 2 190 201 A1**
(43) Date of publication of application: **26.05.2010**
(21) Application number: 08832755.6
(22) Date of filing: 17.09.2008
(51) Int. Cl.: H04N 7/173, H04N 5/445

(54) **DISPAY DEVICE, DISPLAY METHOD AND DISPLAY PROGRAM**

(30) Priority: 18.09.2007 JP 2007240568
(71) Applicant: Panasonic Corporation, Kadoma-shi Osaka 571-8501 (JP)
(72) Inventor: KATAOKA Mitsuteru, Osaka 540-6207 (JP); MITSUMATA, Tatsuaki, Osaka 540-6207 (JP)
(74) Representative: TBK-Patent
(86) International application number: PCT/JP2008/002553
(87) International publication number: WO 2009/037829

(57) **Abstract**

This display apparatus includes a receiver that receives a broadcast signal and extracts program scheduling information from the received broadcast signal, a program table generator that generates a program table in a selected time zone selected by a user, on the basis of the program scheduling information extracted by the receiver, a display that displays the program table generated by the program table generator, and a controller that controls the program table generator. The program table displayed in the display includes a time axis indicating broadcast schedule time and a program display section that displays program frames indicating information about broadcast-scheduled programs along the time axis. On the basis of the program scheduling information, program frames indicating broadcast-scheduled programs firmly scheduled in the selected time zone are displayed as first program frames in the program display section. On the basis of the program scheduling information, a determination is made as to whether there is an empty display region where no first program frame is present in the program display section. When there is an empty display region, a program frame indicating a broadcast-scheduled program firmly scheduled in a time zone out of the selected time zone is displayed as a second program frame in the empty display region.

## Description

### [Technical Field]

The present invention relates to a display apparatus, a display method, and a display program for displaying program information.

### [Background Art]

### (1) Outline of Conventional Program Table Display

A broadcasting system includes a broadcasting station apparatus as a transmitting system for transmitting a broadcast signal for programs from a broadcasting station, and a receiving apparatus as a receiving system for receiving the broadcast signal transmitted from the broadcasting station apparatus (e.g. a television receiver).

In a digital broadcasting system, multiple pieces of information are multiplexed on the broadcast signal sent from the transmitting system to the receiving system, so as to provide an increasing variety of functions in the receiving system according to viewers' demands.

For example, a service that provides information about programs scheduled to be broadcasted (program scheduling information) to viewers is practiced. According to this service, the transmitting system multiplexes program scheduling information as Electric Program Guide (EPG) data on the broadcast signal, and the signal is sent to the receiving system. The receiving system extracts the EPG data from the sent broadcast signal, and presents the information about broadcast-scheduled programs to the viewers.

Now, in the EPG data, "program title", "broadcast start time", "broadcast end time", "channel", and "program identifier" are associated with each broadcast-scheduled program.

"Program title" is the title of the associated broadcast-scheduled program, and "broadcast start time" is the time at which that broadcast-scheduled program is scheduled to start. "Broadcast end time" is the time at which that broadcast-scheduled program is scheduled to end, and "channel" is the channel on which the broadcast-scheduled program is going to be broadcasted. "Program identifiers" are for identifying individual programs scheduled to be broadcasted and programs being broadcasted.

The EPG data may sometimes further include information for allowing viewers to search for desired programs, such as program genre, program description and cast, or information about links to information related to the programs, for example.

Information about broadcast-scheduled programs can be displayed, e.g. on the television screen, by multiplexing EPG data on the broadcast signal. Then, on the basis of the displayed information about broadcast-scheduled programs, the viewer can specify a desired broadcast-scheduled program and check information about that program, for example.

As the service of presenting broadcast-scheduled program information to viewers is put in practice, Association of Radio Industries and Businesses provides a program arrangement information standard (STD-B10) for use in digital broadcasting systems. Accordingly, in current digital broadcasting systems, EPG data is transmitted from transmitting systems on the basis of the standard.

In this standard, the contents of EPG data sent from the transmitting system to receiving system are limited to programs that are scheduled to be broadcasted during a given period from the time at which the EPG data was transmitted (e.g. in eight days from the time of transmission).

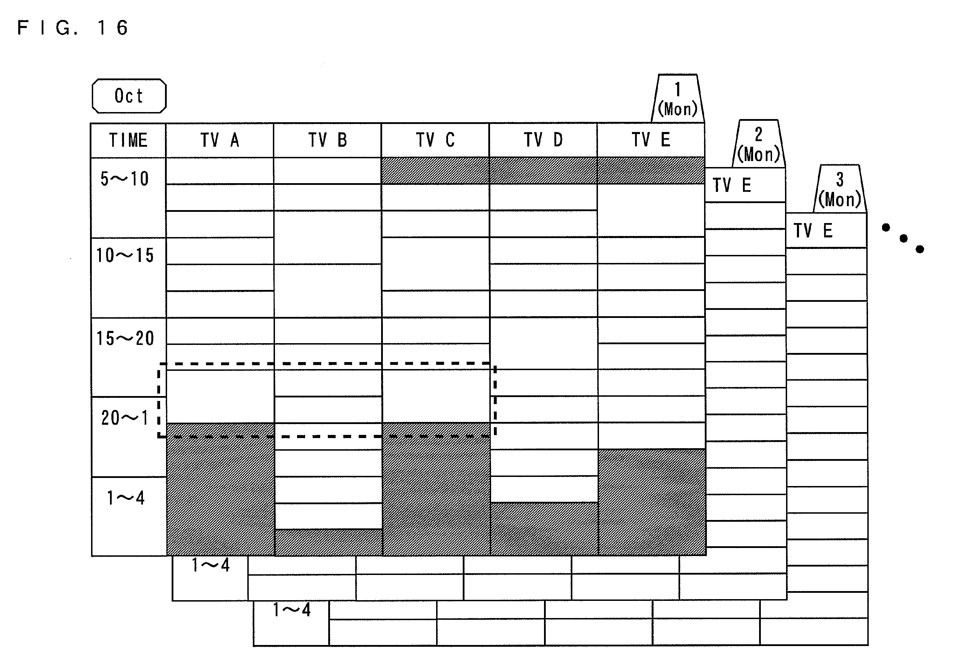

FIG. 16 is a diagram showing an example of a program table for eight days from the time of transmission. In the program table of FIG. 16, broadcast time is shown in the vertical axis direction, and a plurality of TV stations (TV stations A to E) are shown in the horizontal axis direction. The broadcast-scheduled programs of the individual TV stations are thus displayed in the column direction in a time sequential manner. This state of display is called a radio/TV channel guide.

In FIG. 16, broadcast-scheduled programs of the individual TV stations are associated with blank program frames. Also, broadcast halt periods of the individual TV stations are associated with hatched halt frames.

Thus, the contents of EPG data include information about programs scheduled to be broadcasted in a certain period from the time of transmission. Accordingly, a program table as shown in FIG. 16 can be generated with EPG data.

However, in the receiving apparatus, all information for the certain period from the time of transmission cannot be displayed on the television screen at one time. Accordingly, as shown by thick broken line in FIG. 16, for example, part of the program table obtained with the EPG data is displayed on the television screen.

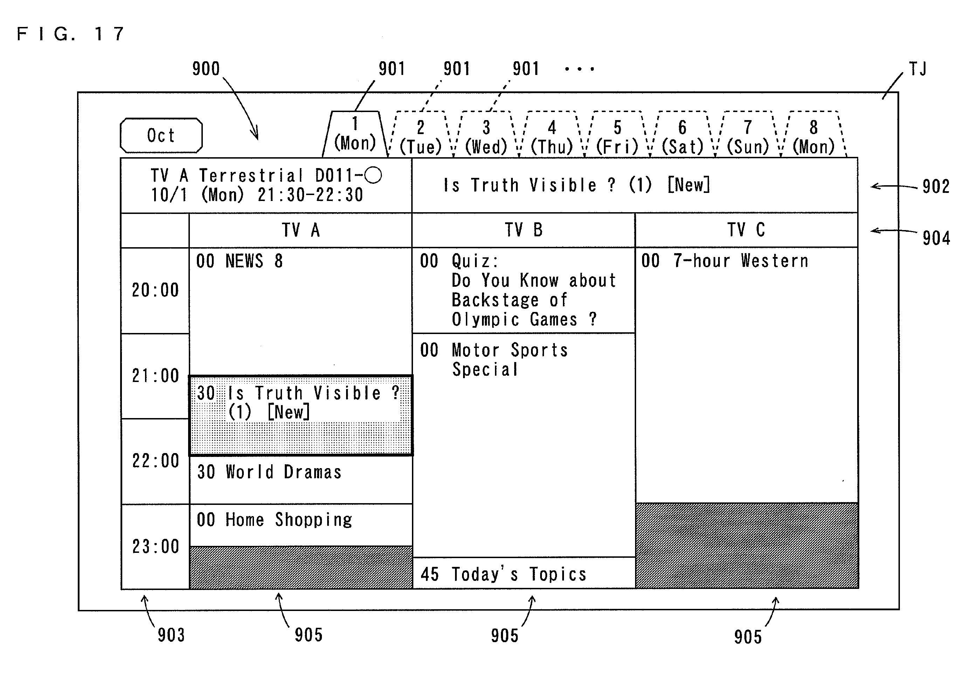

FIG. 17 is a diagram showing an example of a program table displayed on the television screen in a conventional receiving apparatus. As shown in FIG. 17, a program table 900 is displayed on the television screen TJ as the user operates a remote controller, for example.

A plurality of date tabs 901 are displayed in an upper part of the television screen TJ. A focused program display section 902 is displayed as part of the program table 900 under the date tabs 901. The focused program display section 902 displays detailed information about a focused program that will be described later.

A time display section 903, a TV station display section 904, and program display sections 905 are displayed under the focused program display section 902.

In the time display section 903, times in which programs are scheduled to be broadcasted are displayed in the vertical axis direction. In the TV station display section 904, the names of multiple TV stations are displayed in the horizontal axis direction. In the program display sections 905, program frames and halt frames are displayed along the time displayed in the time display section 903.

A user can select one of the plurality of program frames and halt frames on the program table 900 by operating a remote controller. Then, the selected program frame or halt frame is highlighted.

In the program table 900 of FIG. 17, the program frame indicating a program "Is Truth Visible?" of TV station A is highlighted. The program table 900 of FIG. 17 indicates highlighting with light hatching.

In the description below, a state in which a user can thus select a particular program frame or halt frame is referred to as "focus". Also, a broadcast-scheduled program associated with the program frame selected with the focus is referred to as "a focused program".

The user can move the focus from frame to frame by operating a remote controller. Also, the user can scroll the program table 900 along the time axis by sequentially moving the focus along the time axis direction (vertical axis direction).

### (2) Operation of Displaying Program Table in Conventional Receiving Apparatus

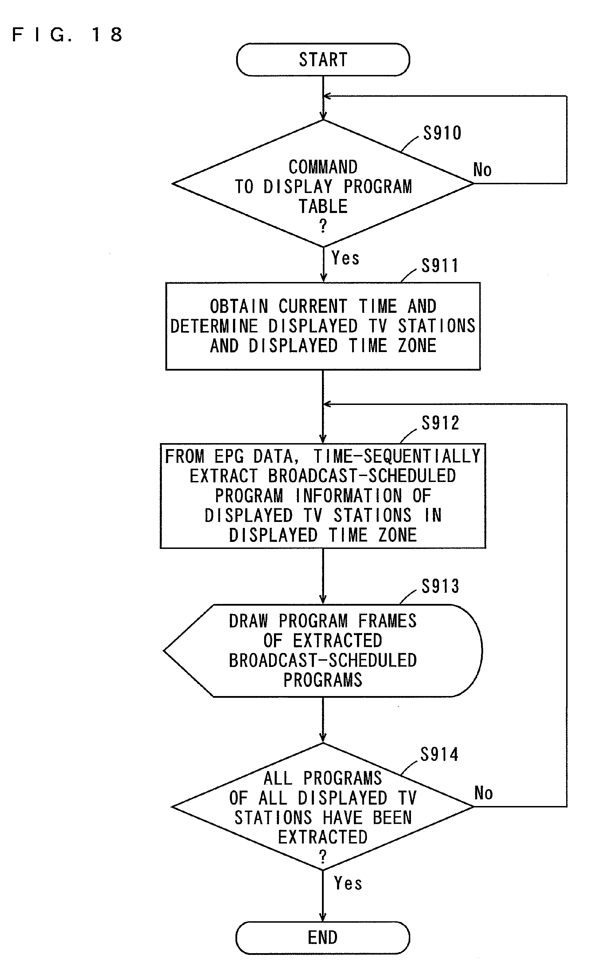

An operation by which a conventional receiving apparatus displays the program table 900 will be described. FIG. 18 is a flowchart showing the operation by which a conventional receiving apparatus displays the program table 900.

First, the receiving apparatus determines whether it has received a command to display the program table 900 from outside, from a user operating a remote controller (Step S910).

When receiving a command, the receiving apparatus obtains the current time with built-in timer means, and determines TV stations to be displayed and a time zone to be displayed (Step S911). Then, for the TV stations to be displayed, the receiving apparatus time-sequentially extracts, from the EPG data, information about programs scheduled to be broadcasted in the time zone to be displayed (Step S912).

Next, the receiving apparatus draws the program frames of the extracted broadcast-scheduled programs on the television screen (Step S913).

Next, the receiving apparatus determines whether it has extracted all broadcast-scheduled programs in the displayed time zone about all displayed TV stations (Step S914).

When all broadcast-scheduled programs to be displayed have been extracted, the receiving apparatus ends the operation of displaying the program table 900. On the other hand, when all broadcast-scheduled programs to be displayed have not been extracted, the receiving apparatus performs the above-described operation of Step S912.

Though not described above, in a time zone where no broadcast-scheduled program is present, a halt frame is drawn as a broadcast halt time in the program display sections 905.

### (3) Operation of Moving Focus in Conventional Receiving Apparatus

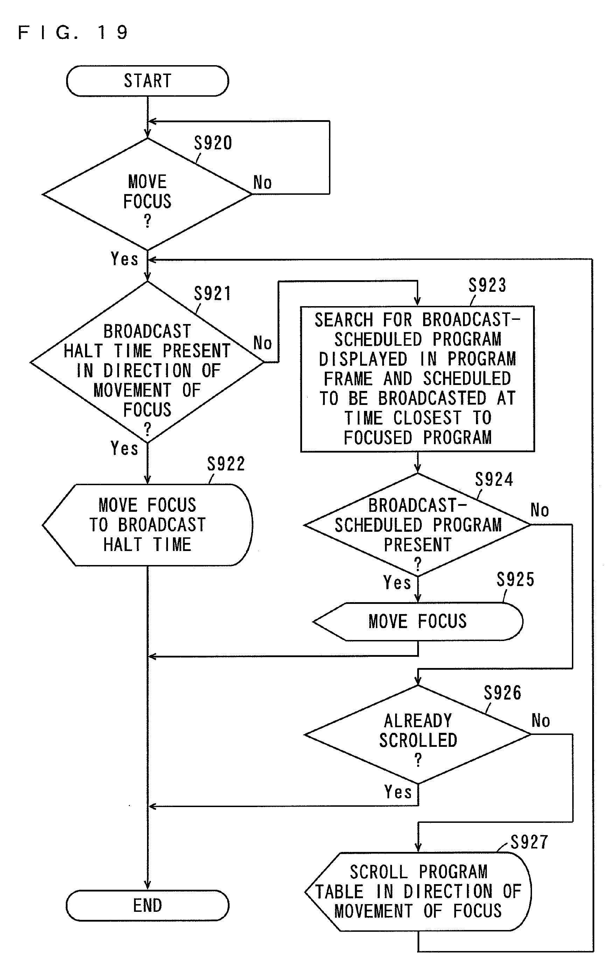

Next, an operation by which a conventional receiving apparatus moves the focus will be described. FIG. 19 is a flowchart illustrating the operation by which a conventional receiving apparatus moves the focus. This example assumes that the focus is positioned in a program frame before it is moved.

First, the receiving apparatus determines whether it has received a command to move the focus from outside, from a user operating a remote controller (Step S920).

When receiving a command to move the focus, the receiving apparatus determines whether there is a broadcast halt time immediately before or after, in the direction of movement of the focus, the time of the program frame where the focus is currently positioned (Step S921).

When there is a broadcast halt time, the receiving apparatus moves the focus to the halt frame present immediately before or after the program frame where the focus is currently positioned (Step S922). The movement of the focus thus ends.

When there isn't a broadcast halt time, the receiving apparatus searches for a broadcast-scheduled program that is scheduled to be broadcasted at a time closest to the time of the current focused program in the direction of movement of the focus, and whose program frame is displayed in the program table 900 (Step S923).

The receiving apparatus then determines whether there is a corresponding broadcast-scheduled program (Step S924).

When there is a broadcast-scheduled program, the receiving apparatus moves the focus to the program frame of that broadcast-scheduled program (Step S925). The movement of the focus thus ends.

When there isn't a broadcast-scheduled program, the receiving apparatus determines whether the scrolling of the program table 900, described later, has been already carried out (Step S926).

When scrolling has been already carried out, the receiving apparatus ends the operation without moving the focus.

When scrolling has not been carried out, the receiving apparatus newly determines TV stations to be displayed and a time zone to be displayed, and extracts information about the broadcast-scheduled programs from the EPG data. Then, the receiving apparatus scrolls the program table 900 in the direction of movement of the focus on the basis of the extracted information (Step S927). After that, the receiving apparatus performs the above-described operation of Step S921.

As mentioned above, for the function of displaying a program table on the television screen of a receiving apparatus, various functions are proposed by considering usability of users and so on (for example, see Patent Documents 1 and 2).
[Patent Document 1] JP 6-504165 A
[Patent Document 2] JP 2006-313948 A

### [Disclosure of the Invention]

### [Problems to be Solved by the Invention]

By the way, as described earlier, according to the program arrangement information standard (STD-B10), the contents of EPG data sent from the transmitting system to the receiving system are limited to programs that are scheduled to be broadcasted in eight days from the time of transmission, for example.

On the other hand, TV stations sometimes determine the scheduling of programs that are scheduled to be broadcasted in a more distant future than eight days from the time when EPG data was transmitted from the transmitting system. Accordingly, viewers can check broadcast-scheduled programs for a longer period when EPG data including information about already broadcast-scheduled programs is sent also about programs scheduled to be broadcasted in the more distant future than eight days from the time of transmission of EPG data.

Programs that are firmly scheduled to be broadcasted in a more distant future than eight days after the time of transmission of EPG data include serial programs broadcasted at fixed times, live programs like sports programs broadcasted on previously determined dates, special programs, and so on.

However, only limited programs can be firmly scheduled to be broadcasted in a more distant future than eight days from the time of transmission of EPG data. Accordingly, when a program table is generated about such future broadcast-scheduled programs, there will be a lot of broadcast time zones that have not yet been firmly scheduled.

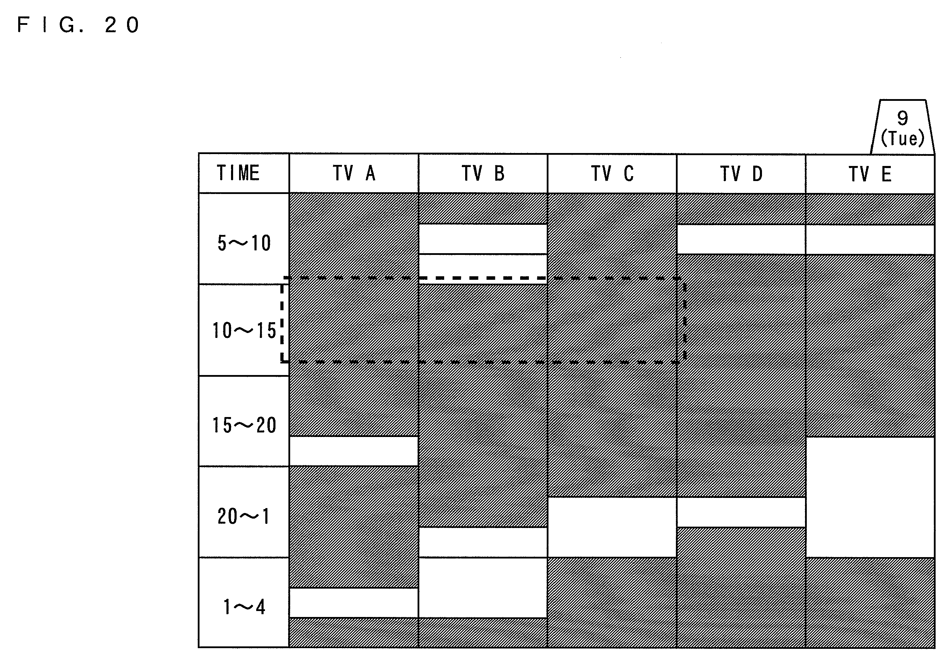

FIG. 20 is a diagram illustrating a program table about nine days after the time of transmission of EPG data. In FIG. 20, time periods where broadcast programs have not yet been firmly scheduled in individual TV stations are associated with hatched undetermined frames.

In this case, as shown in FIG. 20, undetermined frames are displayed in larger areas than the program frames shown as blank regions.

Then, when the television screen of the receiving apparatus displays the part of the program table shown by thick broken line in FIG. 20, for example, the television screen displays undetermined frames only. Then, the user can check no broadcast-scheduled programs about any TV stations.

As stated above, the user can scroll the program table by moving the focus by operating a remote controller. However, the user can only move the focus at random when the television screen displays a lot of undetermined frames and halt frames. The user will then be unable to view a comprehensive program table.

An object of the present invention is to provide a display apparatus, a display method, and a display program that allow users to easily and certainly view a program table even when the program table displayed on a screen include almost no program frames of broadcast-scheduled programs where the scheduling of programs has been firmly determined.

### [Means for Solving the Problems]

(1) A display apparatus according to one aspect of the present invention includes a receiver that receives a broadcast signal and extracts program scheduling information from the received broadcast signal, a program table generator that generates a program table in a selected time zone selected by a user, on the basis of the program scheduling information extracted by the receiver, a display that displays the program table generated by the program table generator, and a controller that controls the program table generator, wherein the program table includes a time axis indicating broadcast schedule time and a program display section that displays, along the time axis, program frames indicating information about broadcast-scheduled programs on the basis of the broadcast schedule time, and wherein the controller controls the program table generator such that, on the basis of the program scheduling information, a program frame indicating a broadcast-scheduled program firmly scheduled in the selected time zone is displayed as a first program frame in the program display section, and the controller determines on the basis of the program scheduling information whether there is an empty display region where the first program frame is absent in the program display section, and when there is the empty display region, the controller controls the program table generator such that a program frame indicating a broadcast-scheduled program firmly scheduled in a time zone out of the selected time zone is displayed as a second program frame in the empty display region.
   In this display apparatus, the receiver receives a broadcast signal, and program scheduling information is extracted from the received broadcast signal. Then, on the basis of the extracted program scheduling information, the program generator generates a program table in a selected time zone selected by a user. The generated program table is displayed in the display.
   The program table includes a time axis indicating broadcast schedule time and a program display section for displaying, along the time axis, program frames indicating information about broadcast-scheduled programs on the basis of the broadcast schedule time.
   In the generation of the program table, on the basis of the program scheduling information, a program frame indicating a broadcast-scheduled program firmly scheduled in the selected time zone is displayed as a first program frame in the program display section. This allows the user to easily and certainly recognize the firmly broadcast-scheduled program in the selected time zone by visually checking the first program frame.
   Also, in the generation of the program table, on the basis of the program scheduling information, the controller determines whether there is an empty display region where no first program frame is present in the program display section.
   When there is an empty display region, a program frame indicating a broadcast-scheduled program firmly scheduled in a time zone other than the selected time zone is displayed as a second program frame in the empty display region.
   Thus, even when almost no first program frames are present in the program display section of the program table, the user can easily and certainly recognize a broadcast-scheduled program out of the selected time zone by visually checking the second program frame.
   Also, the user can re-select the selected time zone on the basis of the broadcast-scheduled program indicated with the second program frame. Thus, the user can easily and certainly check desired programs.
(2) The controller may determine that there is the empty display region in the program display section when, on the basis of the program scheduling information, a region where the first program frame is absent continues for a given length or longer along the time axis in the selected time zone.
   When a region where no first program frame is present continues a given length or longer along the time axis in the program display section of the program table, that region can be used as a display region. Thus, a second program frame smaller than the given length can be certainly displayed in the given-length or longer empty display region.
(3) Among broadcast-scheduled programs firmly scheduled in the time zone out of the selected time zone, the controller may control the program table generator such that a second program frame indicating a broadcast-scheduled program at a time closest to the selected time zone is preferentially displayed in the empty display region.
   In this case, a second program frame indicating a broadcast-scheduled program at a time closest to the selected time zone is displayed in the empty display region. Thus, the user can easily and certainly recognize a broadcast-scheduled program firmly scheduled in a time zone close to the selected time zone by visually checking the second program frame.
(4) What broadcast-scheduled program is to be indicated as the second program frame in the program display section may be determined on the basis of a predetermined condition.
   In this case, a broadcast-scheduled program determined on the basis of a predetermined condition is displayed in a second program frame in the program display section.
   Thus, the user can easily and certainly recognize a broadcast-scheduled program determined on the basis of a condition previously determined by the user.
(5) The predetermined condition may be that the broadcast-scheduled program was previously selected by a broadcasting station, or that the broadcast-scheduled program is included in a genre previously set by a user, or that the broadcast-scheduled program was determined on the basis of a frequency of viewing of a user.
   In this case, the second program frame in the program display section indicates a broadcast-scheduled program determined on the basis of any of the conditions that the broadcast-scheduled program was previously selected by a broadcasting station, that the broadcast-scheduled program is included in a genre previously set by a user, and that the broadcast-scheduled program was determined on the basis of the frequency of viewing of the user.
   Thus, the user can easily and certainly recognize a broadcast-scheduled program previously selected by a broadcasting station, a broadcast-scheduled program included in a genre previously set by the user, or a broadcast-scheduled program determined on the basis of the frequency of viewing of the user.
(6) The controller may control the program table generator such that a plurality of date display frames are generated to indicate information about dates of the program table, and such that the generated date display frames are displayed in the display in a user-selectable manner, and the controller may control the program table generator such that a program table corresponding to the date of a date display frame selected by the user is displayed in the display, wherein each date display frame may be displayed in a first display manner when selected by the user, and displayed in a second display manner when not selected by the user, and a display area of a date display frame displayed in the first display manner may be larger than a display area of a date display frame displayed in the second display manner.
   In this case, a plurality of date display frames are generated to indicate information about the dates of the program table, and the generated date display frames are displayed in the display in a user-selectable manner. Then, a program table corresponding to the date of a date display frame selected by the user is displayed in the display.
   The date display frame selected by the user is displayed in a first display manner in the display, and a date display frame not selected by the user is displayed in a second display manner in the display. Also, the display area of the date display frame displayed in the first display manner is larger than the display area of the date display frame displayed in the second display manner. Accordingly, the user can easily and certainly recognize the date display frame he/she selected.
   Also, since the display area of the date display frame not selected by the user is smaller than the display area of the date display frame selected by the user, the total display area of the plurality of date display frames on the display can be reduced. As a result, the program table can be displayed larger.
(7) The amount of information about the date indicated in a date display frame in the first display manner may be larger than the amount of information about the date indicated in a date display frame in the second display manner.
   Thus, the user can visually check the information about the date indicated in the date display frame in the first display manner to easily and certainly recognize information about the date display frame selected by the user himself/ herself.
(8) Information about the date indicated in each date display frame may be displayed with a character string, and the character string indicated in a date display frame in the first display manner may be displayed with a font that is larger than a font of the character string indicated in a date display frame in the second display manner.
   Thus, the user can more correctly recognize information about the date indicated in the date display frame in the first display manner. Also, since the font of the character string indicated in the date display frame in the second display manner is smaller than the font of the character string indicated in the date display frame in the first display manner, the total display area of the plurality of date display frames on the display can be made smaller.
(9) According to another aspect of the present invention, a display method of displaying a program table in a display includes the steps of receiving a broadcast signal and extracting program scheduling information from the received broadcast signal, generating a program table in a selected time zone selected by a user, on the basis of the extracted program scheduling information, and displaying the generated program table in the display, wherein the program table includes a time axis indicating broadcast schedule time and a program display section that displays, along the time axis, program frames indicating information about broadcast-scheduled programs on the basis of the broadcast schedule time, and wherein the step of generating the program table includes the steps of, on the basis of the program scheduling information, displaying a program frame indicating a broadcast-scheduled program firmly scheduled in the selected time zone, as a first program frame in the program display section, determining on the basis of the program scheduling information whether there is an empty display region where the first program frame is absent in the program display section, and when there is the empty display region, displaying a program frame indicating a broadcast-scheduled program firmly scheduled in a time zone out of the selected time zone, as a second program frame in the empty display region.
   In this display method, a broadcast signal is received and program scheduling information is extracted from the received broadcast signal. Then, on the basis of the extracted program scheduling information, a program table in a selected time zone selected by the user is generated. The generated program table is displayed in the display.
   The program table includes a time axis indicating broadcast schedule time and a program display section for displaying, along the time axis, program frames indicating information about broadcast-scheduled programs on the basis of the broadcast schedule time.
   In the generation of the program table, on the basis of the program scheduling information, a program frame indicating a broadcast-scheduled program firmly scheduled in the selected time zone is displayed as a first program frame in the program display section. This allows the user to easily and certainly recognize the firmly broadcast-scheduled program in the selected time zone by visually checking the first program frame.
   Also, in the generation of the program table, on the basis of the program scheduling information, a determination is made as to whether there is an empty display region where no first program frame is present in the program display section.
   When there is an empty display region, a program frame indicating a broadcast-scheduled program firmly scheduled in a time zone other than the selected time zone is displayed as a second program frame in the empty display region.
   Thus, even when almost no first program frames are present in the program display section of the program table, the user can easily and certainly recognize a broadcast-scheduled program out of the selected time zone by visually checking the second program frame.
   Also, the user can re-select the selected time zone on the basis of the broadcast-scheduled program indicated with the second program frame. Thus, the user can easily and certainly check desired programs.
(10) The step of generating the program table may include the steps of: generating a plurality of date display frames to indicate information about dates of the program table, and displaying the generated date display frames in a user-selectable manner, and displaying a program table corresponding to the date of a date display frame selected by the user in the display; displaying the date display frame selected by the user in a first display manner in the display; and displaying a date display frame not selected by the user in a second display manner in the display, wherein a display area of the date display frame displayed in the first display manner may be larger than a display area of the date display frame displayed in the second display manner.
   In this case, a plurality of date display frames are generated to indicate information about the dates of the program table, and the generated date display frames are displayed in the display in a user-selectable manner. Then, a program table corresponding to the date of a date display frame selected by the user is displayed in the display.
   The date display frame selected by the user is displayed in a first display manner in the display, and a date display frame not selected by the user is displayed in a second display manner in the display. Also, the display area of the date display frame displayed in the first display manner is larger than the display area of the date display frame displayed in the second display manner. Accordingly, the user can easily and certainly recognize the date display frame he/she selected.
   Also, since the display area of the date display frame not selected by the user is smaller than the display area of the date display frame selected by the user, the total display area of the plurality of date display frames on the display can be reduced. As a result, the program table can be displayed larger.
(11) According to still another aspect of the present invention, a display program that can be executed by a processing device to display a program table in a display includes the processes of receiving a broadcast signal and extracting program scheduling information from the received broadcast signal, generating a program table in a selected time zone selected by a user, on the basis of the extracted program scheduling information, and displaying the generated program table in the display, wherein the program table includes a time axis indicating broadcast schedule time and a program display section that displays, along the time axis, program frames indicating information about broadcast-scheduled programs on the basis of the broadcast schedule time, and wherein the process of generating the program table causes the processing device to perform the processes of, on the basis of the program scheduling information, displaying a program frame indicating a broadcast-scheduled program firmly scheduled in the selected time zone, as a first program frame in the program display section, determining on the basis of the program scheduling information whether there is an empty display region where the first program frame is absent in the program display section, and when there is the empty display region, displaying a program frame indicating a broadcast-scheduled program firmly scheduled in a time zone out of the selected time zone, as a second program frame in the empty display region.
   In this display program, a broadcast signal is received and program scheduling information is extracted from the received broadcast signal. Then, on the basis of the extracted program scheduling information, a program table in a selected time zone selected by the user is generated. The generated program table is displayed in the display.
   The program table includes a time axis indicating broadcast schedule time and a program display section for displaying, along the time axis, program frames indicating information about broadcast-scheduled programs on the basis of the broadcast schedule time.
   In the generation of the program table, on the basis of the program scheduling information, a program frame indicating a broadcast-scheduled program firmly scheduled in the selected time zone is displayed as a first program frame in the program display section. This allows the user to easily and certainly recognize the firmly broadcast-scheduled program in the selected time zone by visually checking the first program frame.
   Also, in the generation of the program table, on the basis of the program scheduling information, a determination is made as to whether there is an empty display region where no first program frame is present in the program display section.
   When there is an empty display region, a program frame indicating a broadcast-scheduled program firmly scheduled in a time zone other than the selected time zone is displayed as a second program frame in the empty display region.
   Thus, even when almost no first program frames are present in the program display section of the program table, the user can easily and certainly recognize a broadcast-scheduled program out of the selected time zone by visually checking the second program frame.
   Also, the user can re-select the selected time zone on the basis of the broadcast-scheduled program indicated with the second program frame. Thus, the user can easily and certainly check desired programs.
(12) The process of generating the program table may include the processes of: generating a plurality of date display frames to indicate information about dates of the program table, and displaying the generated date display frames in a user-selectable manner, and displaying a program table corresponding to the date of a date display frame selected by the user in the display; displaying the date display frame selected by the user in a first display manner in the display; and displaying a date display frame not selected by the user in a second display manner in the display, wherein a display area of the date display frame displayed in the first display manner may be larger than a display area of the date display frame displayed in the second display manner.
   In this case, a plurality of date display frames are generated to indicate information about the dates of the program table, and the generated date display frames are displayed in the display in a user-selectable manner. Then, a program table corresponding to the date of a date display frame selected by the user is displayed in the display.
   The date display frame selected by the user is displayed in a first display manner in the display, and a date display frame not selected by the user is displayed in a second display manner in the display. Also, the display area of the date display frame displayed in the first display manner is larger than the display area of the date display frame displayed in the second display manner. Accordingly, the user can easily and certainly recognize the date display frame he/she selected.
   Also, since the display area of the date display frame not selected by the user is smaller than the display area of the date display frame selected by the user, the total display area of the plurality of date display frames on the display can be reduced. As a result, the program table can be displayed larger.

### [Effects of the Invention]

According to the present invention, even when a program table displayed on the screen includes almost no program frames for firmly broadcast-scheduled programs, a user can recognize broadcast-scheduled programs in a time zone out of the broadcast time zone displayed in the program table.

### [Brief Description of the Drawings]

[FIG. 1] FIG. 1 is a block diagram illustrating the configuration of a display apparatus according to one embodiment of the present invention.
[FIG. 2] FIG. 2 is a schematic diagram illustrating the input device of FIG. 1.
[FIG. 3] FIG. 3 is a diagram showing an example of the display of a program table displayed in the display of the display apparatus of FIG. 1.
[FIG. 4] FIG. 4 is a diagram for illustrating how the display of the program table changes when the focus is moved.
[FIG. 5] Fig. 5 is a diagram for illustrating how the display of the program table changes when the focus is moved.
[FIG. 6] FIG. 6 is a flowchart illustrating a program table display program by which the display apparatus of FIG. 1 displays a program table.
[FIG. 7] FIG. 7 is a flowchart illustrating the program table display program by which the display apparatus of FIG. 1 displays a program table.
[FIG. 8] FIG. 8 is a flowchart illustrating the program table display program by which the display apparatus of FIG. 1 displays a program table.
[FIG. 9] FIG. 9 is a flowchart illustrating a focus moving program by which the display apparatus of FIG. 1 moves the focus.
[FIG. 10] FIG. 10 is a flowchart illustrating the focus moving program by which the display apparatus of FIG. 1 moves the focus.
[FIG. 11] FIG. 11 is a diagram showing another example of the display of a program table displayed in the display of the display apparatus of FIG. 1.
[FIG. 12] FIG. 12 is a diagram showing still another example of the display of a program table displayed in the display of the display apparatus of FIG. 1.
[FIG. 13] FIG. 13 is a diagram showing still another example of the display of a program table displayed in the display of the display apparatus of FIG. 1.
[FIG. 14] FIG. 14 is a diagram illustrating another manner to display date tabs.
[FIG. 15] FIG. 15 is a diagram illustrating still other manners to display date tabs.
[FIG. 16] FIG. 16 is a diagram showing an example of a program table for eight days after the time of transmission.
[FIG. 17] FIG. 17 is a diagram showing an example of a program table displayed on a television screen of a conventional receiving apparatus.
[FIG. 18] FIG. 18 is a flowchart illustrating an operation by which a conventional receiving apparatus displays a program table.
[FIG. 19] FIG. 19 is a flowchart illustrating an operation by which a conventional receiving apparatus moves the focus.
[FIG. 20] FIG. 20 is a diagram illustrating a program table after nine days from when EPG data was transmitted.

### [Best Mode for Carrying out the Invention]

A display apparatus, a display method, and a display program according to an embodiment of the present invention will be described referring to the drawings.

In this embodiment, the display apparatus is a television receiver that receives a broadcast signal for programs transmitted from a broadcasting station.

Also, in this embodiment, information about programs scheduled to be broadcasted (program scheduling information) is multiplexed as Electric Program Guide (EPG) data on the broadcast signal and sent from the broadcasting station to the display apparatus.

The program scheduling information is information composed of multiple pieces of program information. The program information is information about each broadcast-scheduled program, at least including the broadcasting station and the broadcast scheduled date and time. In this embodiment, the program information includes program genre, program description, program cast, etc. as information for allowing viewers to search for desired programs, or link information to information related to the programs, for example.

According to the program arrangement information standard (STD-B10) used in digital broadcasting systems, the contents of EPG data sent from a transmitting system to a receiving system are limited to programs that are scheduled to be broadcasted in eight days after the EPG data was transmitted; but, in this embodiment, EPG data includes information about programs scheduled to be broadcasted in a more distant future than eight days after the time of transmission of EPG data.

### (1) Configuration of Display Apparatus

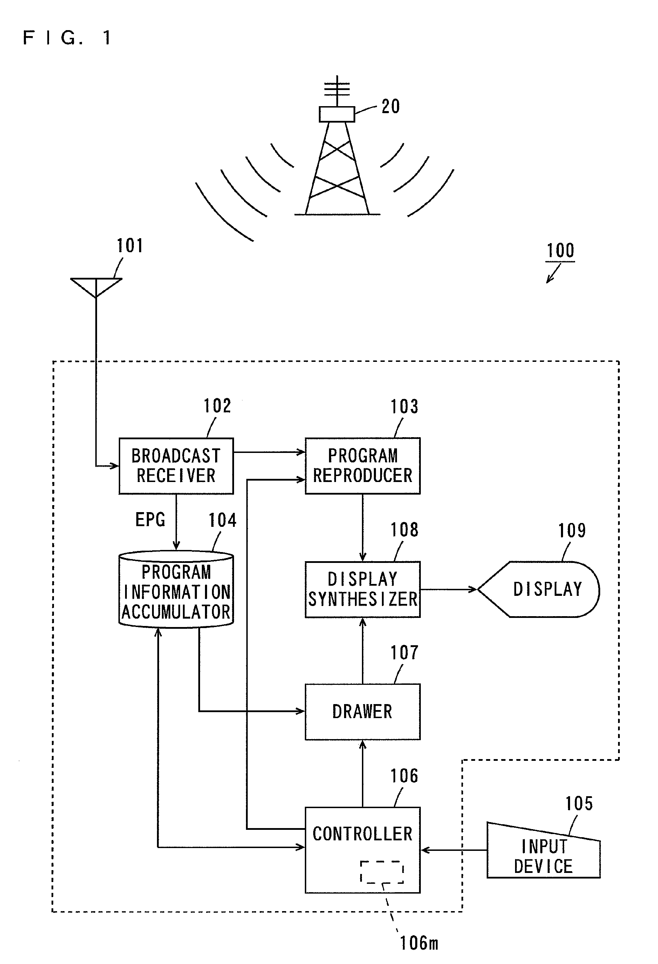

FIG. 1 is a block diagram illustrating the configuration of a display apparatus according to one embodiment of the present invention. As shown in FIG. 1, the display apparatus 100 includes a receiving antenna 101, a broadcast receiver 102, a program reproducer 103, a program information accumulator 104, an input device 105, a controller 106, a drawer 107, a display synthesizer 108, and a display 109. FIG. 1 shows the main body of the display apparatus 100 with dotted line.

The receiving antenna 101 receives broadcast waves and converts the waves into electric signal form. Thus, the broadcast waves received from the broadcasting station apparatus 20 are given to the broadcast receiver 102 in the form of an electric signal. In this embodiment, the receiving antenna 101 is a television broadcast receiving antenna used for common television receivers. The television broadcasting includes terrestrial digital broadcasting and satellite digital broadcasting.

The broadcast receiver 102 includes a high-frequency tuner and a transport stream (hereinafter referred to simply as TS) decoder not shown. Thus, in the broadcast receiver 102, the high-frequency tuner selects a station by selecting frequencies of broadcast waves received at the receiving antenna 101. The selected broadcast signal is thus given to the TS decoder.

The TS decoder of the broadcast receiver 102 decodes the broadcast signal given from the high-frequency tuner, and extracts packets of EPG data, video data and sound data. Thus, the packets of video data and sound data of the program broadcasted from a particular broadcasting station are given to the program reproducer 103. The packets of EPG data are given to the program information accumulator 104.

The program reproducer 103 reproduces the video data and sound data given from the broadcast receiver 102. In this embodiment, the program reproducer 103 is an MPEG (Motion Picture Experts Group) decoder, for example.

The video data reproduced by the program reproducer 103 is given to the display synthesizer 108. On the other hand, sound data is given to a sound data converter not shown, and converted from digital form into analog form. The analog-converted sound data is outputted from a sound output unit not shown.

As described above, EPG data is multiplexed on the broadcast signal sent from the broadcasting station apparatus 20 to the display apparatus 100. The program information accumulator 104 accumulates EPG data given from the broadcast receiver 102. Also, the program information accumulator 104 gives the accumulated EPG data to the drawer 107 according to a command signal given from the controller 106.

The input device 105 is operated by a user. In this embodiment, the input device 105 is a remote controller. Accordingly, the main body of the display apparatus 100 includes a receiver (not shown) for receiving signals sent from the remote controller. The remote controller will be described in detail later.

As well as a remote controller, the input device 105 can be a keyboard, a pointing device, a speech recognizer, an image recognizer, or a combination thereof.

The controller 106 is composed of a CPU (Central Processing Unit) and a storage 106m, for example. The storage 106m stores a program table display program and a focus moving program described later. The controller 106 controls the operations of components of the display apparatus 100 on the basis of the programs stored in the storage 106m.

The controller 106 also manages dialog with a user. The dialog with a user is realized with GUI (Guraphic User Interface) using OSD (On Screen Display).

The drawer 107 generates graphic images for OSD on the basis of EPG data given from the program information accumulator 104. Generated images are given to the display synthesizer 108.

The display synthesizer 108 synthesizes video data given from the program reproducer 103 and images given from the drawer 107, and outputs the synthesized video data to the display 109. The video and OSD of the program are thus displayed on the display 109.

The display 109 is formed of a plasma display panel, a liquid-crystal display panel, or an organic electroluminescent panel, for example.

### (2) Input Device

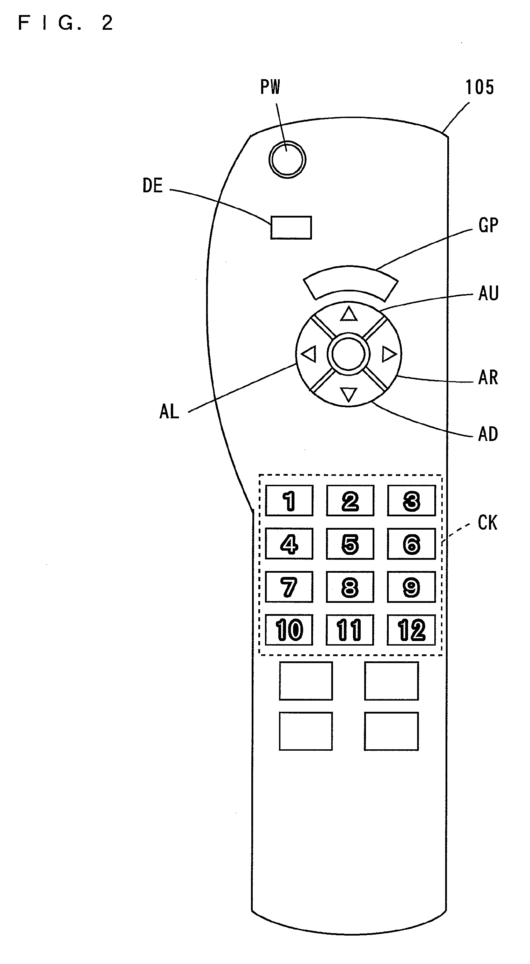

FIG. 2 is a schematic diagram illustrating the input device 105 of FIG. 1.

As shown in FIG. 2, the input device 105 has a power button PW, a program table button GP, a right button AR, a left button AL, an up button AU, a down button AD, a date tab select button DE, channel buttons CK, and so on.

The power button PW is operated by a user to turn on/off the power supply to the display apparatus 100. The program table button GP is operated by a user to display a program table based on EPG data on the display 109 of FIG. 1.

The right button AR, left button AL, up button AU and down button AD are operated by a user to move a focus in the program table displayed on the display 109. The focus will be described in detail later.

The date tab select button DE is operated by a user to select a particular date tab from a plurality of date tabs displayed together with a program table on the display 109. The date tabs will be described in detail later.

The channel buttons CK include multiple buttons. Different channels are assigned to individual buttons. When a user presses a button, the program of the channel assigned to that button is displayed on the display 109.

In the description below, the right button AR, left button AL, up button AU and down button AD are also referred to together as cursor buttons.

### (3) Example of Display of Program Table

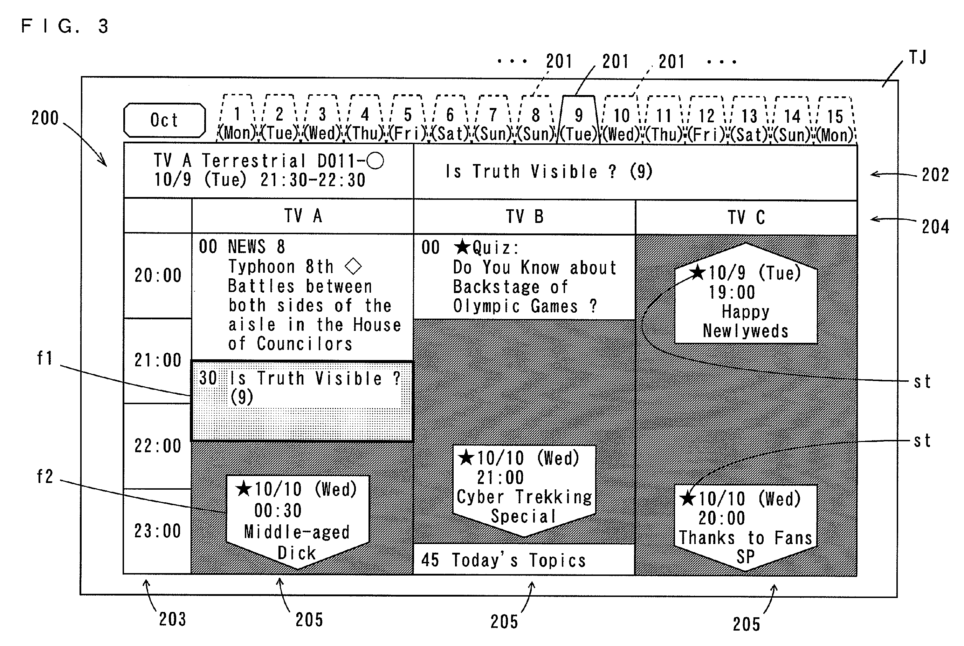

FIG. 3 is a diagram showing an example of the display of a program table displayed on the display 109 of the display apparatus 100 of FIG. 1.

As shown in FIG. 3, for example, when the user operates the input device 105 of FIG. 2, a program table 200 is displayed on the television screen TJ of the display 109.

A plurality of date tabs 201 for 15 days, including the day when the EPG data was transmitted (from October 1 to October 15), are displayed in an upper part of the television screen TJ. These date tabs 201 have a common size, and each shows the date and what day of the week it is.

For example, the user presses the date tab select button DE and cursor buttons shown in FIG. 2 to select a desired date of the program table 200. Thus, the user of the display apparatus 100 can check the program table 200 also about programs scheduled to be broadcasted in the future exceeding 8 days from the time of transmission of EPG data. In the example of FIG. 3, the date tab 201 of October 9, exceeding 8 days from the time of transmission of EPG data, is selected.

A focused program display section 202 is displayed under the date tabs 201. The focused program display section 202 displays detailed information about a focused program described later.

A time display section 203, a TV station display section 204, and program display sections 205 are displayed under the focused program display section 202.

The time display section 203 shows the time of scheduling of broadcast programs in the vertical axis direction. In the example of FIG. 3, the time display section 203 shows broadcast schedule time in hours from twenty to twenty three.

The TV station display section 204 shows the names of multiple TV stations in the horizontal axis direction. In the example of FIG. 3, TV station A, TV station B, and TV station C are arranged in this order in the horizontal axis direction.

In this embodiment, the program display sections 205 display program frames, balloon frames, halt frames, and undetermined frames, which will be described later, along the time shown in the time display section 203.

Programs that are firmly scheduled to be broadcasted from individual TV stations in the time zone displayed in the time display section 203 are associated with program frames. In FIG. 3, the program frames are shown as rectangular frames.

Programs that are firmly scheduled to the broadcasted from individual TV stations at times out of the time zone displayed in the time display section 203 are associated with balloon frames. The balloon frames are displayed in display regions of halt and undetermined frames. Accordingly, no balloon frames are displayed when the program table 200 includes no halt and undetermined frames, and also when the display areas of halt and undetermined frames are smaller than a given size. What broadcast-scheduled programs are associated with balloon frames will be described later. In FIG. 3, the balloon frames are shown as pentagon frames.

Thus, the user can easily distinguish program frames, halt frames and undetermined frames, and balloon frames. Also, the user can easily recognize whether the program associated with a balloon frame will be broadcasted in the past or in the future from the time zone displayed in the time display section 203.

As shown in FIG. 3, each balloon frame shows the title and the date and time of an associated broadcast-scheduled program, for example. Alternatively, each balloon frame may show the date, only when the date of the broadcast-scheduled program associated with that balloon frame differs from the date of the displayed program table 200.

As described above, balloon frames are displayed in display regions of halt and undetermined frames. Accordingly, as shown in the program display section 205 of TV station B in FIG. 3, a balloon frame is not always positioned at the upper end or lower end of a program display section 205.

A halt time in which a TV station halts broadcasting is associated with a halt frame. FIG. 3 shows no halt frame. A time in which the scheduling of broadcast-scheduled programs has not yet been determined is associated with an undetermined frame. In FIG. 3, undetermined frames are hatched dark.

The user can select one of the plurality of frames displayed in the program table 200 by operating the input device 105 of FIG. 2. Then, the selected frame is highlighted.

In the program table 200 of FIG. 3, the program frame f1 for a program "Is Truth Visible?" of TV station A is highlighted. The program table 200 of FIG. 3 shows highlighting with light hatching.

In the description below, a state where a user can thus select a particular program frame, balloon frame, halt frame or undetermined frame is called "focus". Also, the broadcast-scheduled program associated with a program frame or balloon frame selected by the focus is called "a focused program".

Thus, in FIG. 3, the program "Is Truth Visible?" of TV station A is the focused program. Accordingly, the above-described focused program display section 202 displays detailed information about the program "Is Truth Visible?". The detailed information includes the TV station of that program, broadcast start time, broadcast end time, program title, contents, cast, and so on.

The balloon frames are pentagon in the example above, but balloon frames may be approximately circular.

### (4) Example of Movement of Focus

The user can move the focus from frame to frame by operating the cursor buttons of the input device 105 of FIG. 2.

Also, the user can scroll the program table 200 along the time axis by sequentially moving the focus along the time axis direction (vertical axis direction). By thus moving the focus along the time axis direction, the user can selectively adjust the displayed time zone of the one-station program table 200 on the television screen TJ, as a selected time zone.

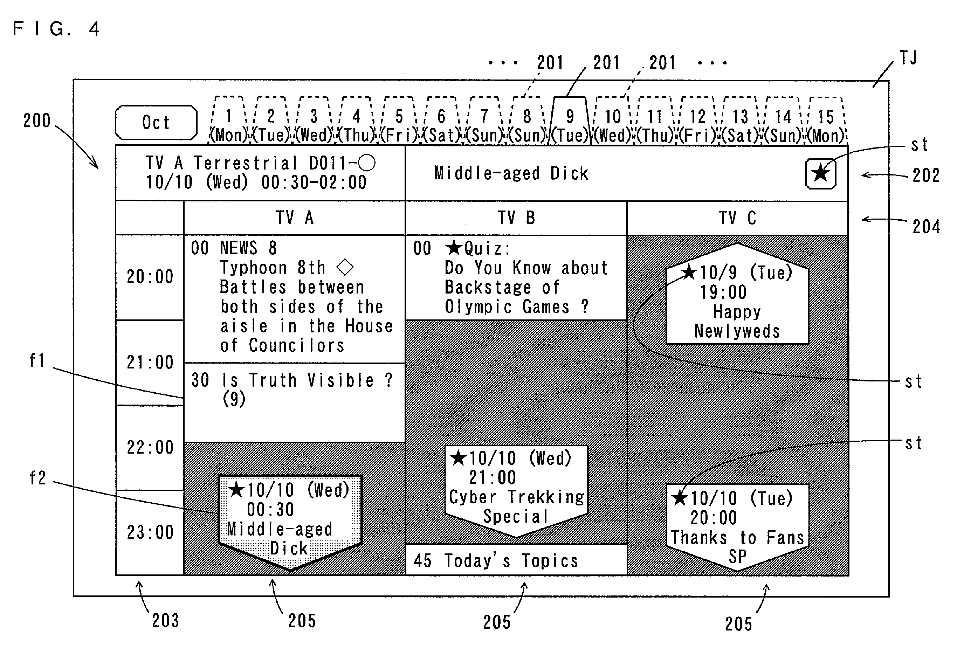

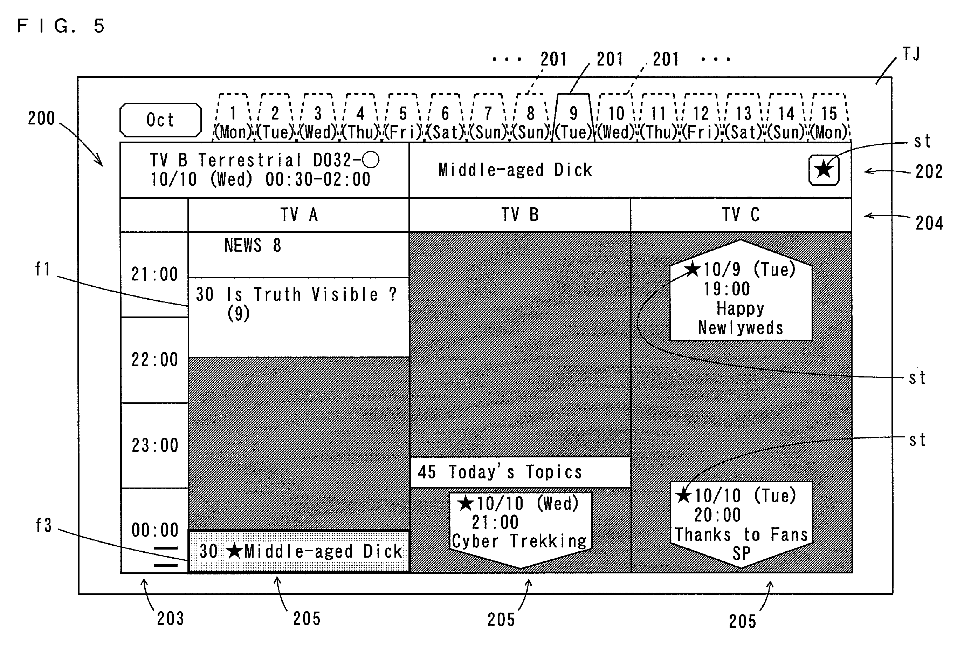

How the program table 200 is displayed when the focus is moved will be described referring to FIGS. 3 to 5. FIGS. 4 and 5 are diagrams for illustrating how the display of the program table 200 changes when the focus is moved.

For example, suppose that the user pressed the down button of FIG. 2, with the focus positioned in the program frame f1 of the program "Is Truth Visible?" of TV station A as shown in the program table 200 of FIG. 3.

In this case, as shown in FIG. 4, the program frame f1 of the program "Is Truth Visible?" of TV station A changes from a highlighted state to a normal display state. Then, the balloon frame f2 of the program "Middle-aged Dick" of TV station A, located under the program frame f1, is highlighted.

That is, when the user presses the down button AD, the focus moves from the program frame f1 to the balloon frame f2 displayed on the future side of the program frame f1. Then, the focused program display section 202 displays detailed information about the program "Middle-aged Dick".

In this example, the focused program display section 202 displays: TV station A broadcasting "Middle-aged Dick"; broadcast start time "October 10, 00:30"; broadcast end time "October 10, 2:00", and program title "Middle-aged Dick".

Next, suppose that the user further pressed the down button AD of FIG. 2, with the focus positioned in the balloon frame f2 of the program "Middle-aged Dick" of TV station A as shown in the program table 200 of FIG. 4.

In this case, in the program table 200 of FIG. 4, the focus is positioned at the bottom end of the program display section 205. Accordingly, as shown in FIG. 5, the program table 200 is scrolled a given time length to the future.

In this example, the program table 200 is scrolled one hour to the future. Then, the time display section 203 indicates the broadcast schedule time in hours from twenty one to zero.

When the program table 200 is scrolled one hour to the future, the program "Middle-aged Dick" associated with the balloon frame f2 in the program table 200 of FIG. 4 becomes a broadcast-scheduled program within the time zone indicated in the time display section 203.

Then, as shown in FIG. 5, in the program table 200, the frame corresponding to the program "Middle-aged Dick" is changed from the pentagon balloon frame f2 to a rectangular program frame f3. Then, the focus is positioned in the changed program frame f3.

As described above, the user can scroll the program table 200 and move the focus to a desired program frame or balloon frame by pressing the cursor buttons of the input device 105 of FIG. 2.

The description above has shown an example in which the focus is moved in the vertical axis direction (time axis direction), but the user can move the focus also in the horizontal axis direction (TV station direction) by pressing the right button AR and left button AL of FIG. 2.

By the way, when the program 200 is scrolled, the state of display of the program table 200 considerably varies. For example, in the program display section 205 of TV station B of FIG. 3, the balloon frame of "Cyber Trekking Special" is displayed above the program frame of "Today's Topics", but it is displayed under the program frame "Today's Topics" as shown in FIG. 5 when the program table was scrolled.

In the program table 200 shown in FIGS. 3 to 5, black star marks st are attached to some program frames and balloon frames. In this embodiment, the black star marks st indicate broadcast-scheduled programs that are selected by TV stations as programs that they especially want to advertise, for example.

Accordingly, with the program table 200 of FIG. 3, the user can easily recognize that "Middle-aged Dick" is selected by TV station A as a program that they especially want to advertise. Also, the user can easily recognize that "Quiz: Do You Know about Backstage of Olympic Games?" and "Cyber Trekking Special" are programs selected by TV station B as programs they especially want to advertise. Furthermore, the user can easily recognize that "Happy Newlyweds" and "Thanks to Fans Special" are programs selected by TV station C as programs they especially want to advertise.

As shown in FIGS. 4 and 5, when the focus is positioned in a program frame or a balloon frame having black star mark st, the focused program display section 202 also shows black star mark st. This allows the user to sufficiently identify programs selected by individual TV stations as programs they especially want to advertise.

In the description below, among broadcast-scheduled programs, programs that individual TV stations especially want to advertise are referred to as preferential programs. That is, in the Example of FIGS. 3 to 5, the broadcast-scheduled programs associated with program frames or balloon frames with black star marks st are preferential programs.

Preferential programs are indicated by black star marks st in this embodiment, but marks other than black star marks st (characters, icons, etc.) may be used to indicate preferential programs. Also, a common background color may be set in program frames and balloon frames associated with preferential programs such that these frames can be distinguished from program frames and balloon frames associated with other broadcast-scheduled programs.

### (5) Operation by which Display Apparatus Displays Program Table

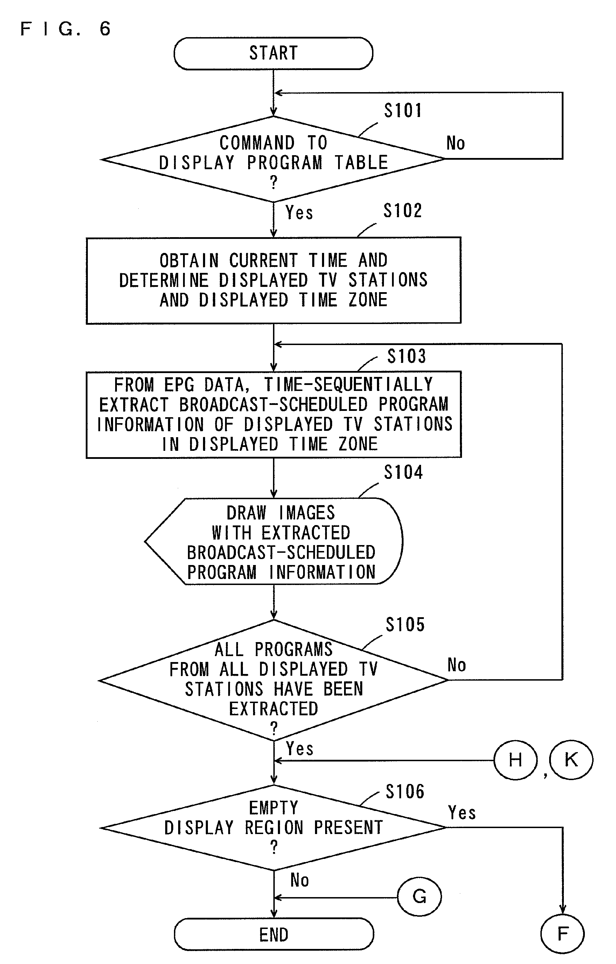

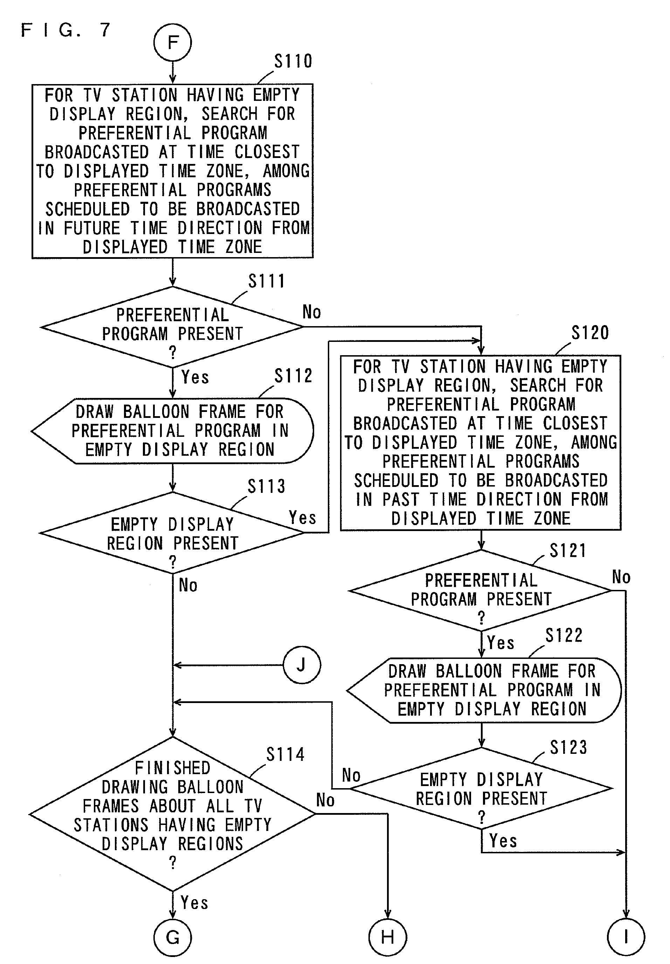

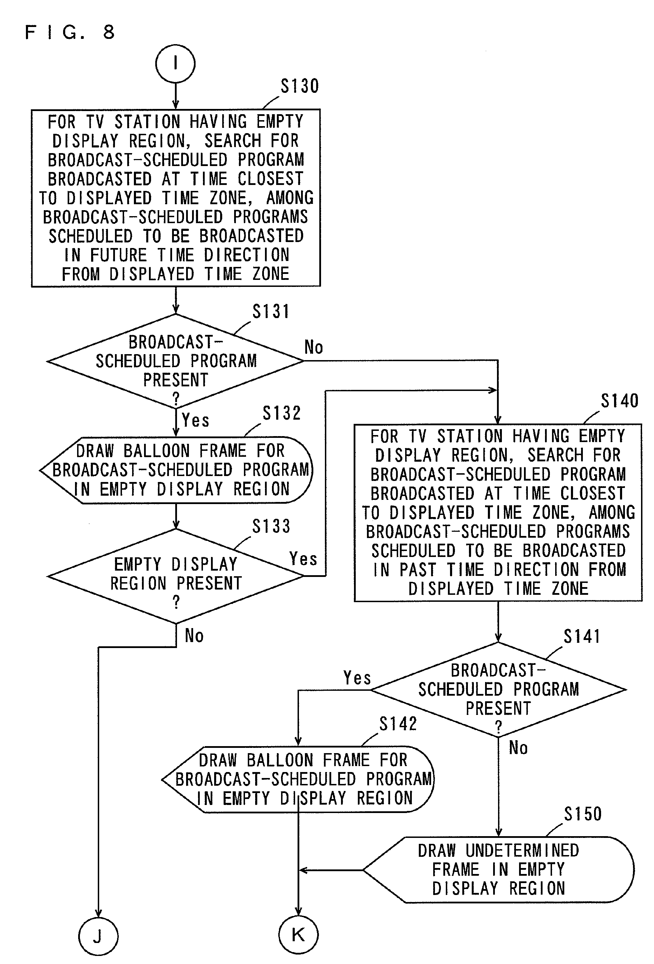

The operation by which the display apparatus 100 of FIG. 1 displays the program table 200 will be illustrated. FIGS. 6 to 8 show a flowchart illustrating the program table display program by which the display apparatus 100 of FIG. 1 displays the program table 200. As described above, this program is stored in the storage 106m of FIG. 1.

First, the controller 106 of FIG. 1 determines whether it has received a command to display the program table 900 from outside, from a user operating the input device 105 of FIG. 1 (Step S101).

When receiving a command, the controller 106 obtains the current time by using built-in timer means, and determines TV stations to be displayed and a time zone to be displayed (Step S102). Then, from EPG data, the controller 106 time-sequentially extracts information about programs scheduled to be broadcasted in the time zone to be displayed from the TV stations to be displayed (Step S103).

Next, the controller 106 draws the program frames of the extracted broadcast-scheduled programs on the television screen TJ (Step S104). Thus, as shown in FIG. 3, for example, program frames including the extracted broadcast-scheduled program information are displayed in the program display sections 205.

Next, the controller 106 determines whether it has extracted all broadcast-scheduled programs in the time zone to be displayed about all TV stations to be displayed (Step S105).

As all broadcast-scheduled programs to be displayed have been extracted, the controller 106 determines whether there are empty display regions, where no program frames are present, in the program display sections 205 (Step S106).

More specifically, on the basis of EPG data given from the broadcasting station apparatus 20 shown in FIG. 1, for example, the controller 106 determines whether the time zone to be displayed includes a time region where the scheduling of broadcast-scheduled programs has not been determined continuously for one hour or longer, or a broadcast halt time that continues one hour or longer.

When there is no empty display region, the controller 106 ends the operation of displaying the program table 200. When there is a time region where the scheduling of broadcast-scheduled programs has not been determined for a time period shorter than one hour, or when a broadcast halt time is shorter than one hour, the controller 106 draws an undetermined frame or a halt frame in the corresponding part of the program display sections 205.

When all broadcast-scheduled programs to be displayed have not been extracted in Step S105, the controller 106 performs the operation of Step S103.

When there is an empty display region in Step S106, the controller 106 searches for a preferential program that is going to be broadcasted at a time closest to the time zone to be displayed, among preferential programs scheduled to be broadcasted from the TV station having the empty display region at a time in the future direction from the time zone to be displayed (Step S110). Then, the controller 106 determines whether there is a preferential program (Step S111).

When there is a preferential program, the controller 106 extracts information about that preferential program from EPG data, and draws a balloon frame for that preferential program in the empty display region (Step S112). Thus, as shown in FIG. 3, for example, a balloon frame containing the extracted information about that preferential program is drawn in the program display section 205.

Next, for the TV station for which the balloon frame was drawn in Step S112, the controller 106 further determines whether there is an empty display region where no program frame and no balloon frame is present in the program display section 205 (Step S113). Specifically, the controller 106 makes the determination in a way similar to Step S106.

When there is no empty display region, the controller 106 determines whether it has drawn balloon frames for all TV stations determined to have empty display regions (Step S114).

When it finished drawing balloon frames, the controller 106 ends the operation of displaying the program table 200.

On the other hand, when it has not finished drawing balloon frames, the controller 106 returns to the operation of Step S106, and determines whether other TV stations have further empty display regions.

When there isn't a preferential program in Step S111, the controller 106 searches for a preferential program that is going to be broadcasted at a time closest to the time zone to be displayed, among preferential programs scheduled to be broadcasted from the TV station having the empty display region at a time in the past direction from the time zone to be displayed (Step S120). Then, the controller 106 determines whether there is a preferential program (Step S121).

When there is a preferential program, as in Step S112, the controller 106 extracts information about that preferential program from EPG data, and draws a balloon frame for that preferential program in the empty display region (Step S122).

Next, for the TV station for which the balloon frame was drawn in Step S122, the controller 106 further determines whether there is an empty display region where no program frame, no halt frame and no balloon frame is present in the program display section 205 (Step S123). Specifically, the controller 106 makes the determination in a way similar to Step S106.

When there is no empty display region, the controller 106 performs the operation of the Step S114.

When there isn't a preferential program in Step S121, and when there is an empty display region in Step S123, the controller 106 searches for a broadcast-scheduled program that is going to be broadcasted at a time closest to the time zone to be displayed, among broadcast-scheduled programs scheduled to be broadcasted from the TV station having the empty display region at a time in the future direction from the time zone to be displayed (Step S130). Then, the controller 106 determines whether there is such a broadcast-scheduled program (Step S131).

When there is a broadcast-scheduled program, the controller 106 extracts information about that broadcast-scheduled program from EPG data, and draws a balloon frame for that broadcast-scheduled program in the empty display region (Step S132).

Next, for the TV station for which the balloon frame was drawn in Step S132, the controller 106 further determines whether there is an empty display region where no program frame and no balloon frame is present in the program display section 205 (Step S133). Specifically, the controller 106 makes the determination in a way similar to Step S106.

When there is no empty display region, the controller 106 performs the above-described operation of Step S114.

When there isn't a broadcast-scheduled program in Step S131, the controller 106 searches for a broadcast-scheduled program that is going to be broadcasted at a time closest to the time zone to be displayed, among broadcast-scheduled programs scheduled to be broadcasted from the TV station having the empty display region at a time in the past direction from the time zone to be displayed (Step S140). Then, the controller 106 determines whether there is such a broadcast-scheduled program (Step S141).

When there is a broadcast-scheduled program, as in Step S112, the controller 106 extracts information about that broadcast-scheduled program from EPG data, and draws a balloon frame for that broadcast-scheduled program in the empty display region (Step S142). Then, the controller 106 returns to the operation of Step S106.

On the other hand, when there isn't a broadcast-scheduled program, the controller 106 draws an undetermined frame in that empty display region (Step S150). Then, the controller 106 returns to the operation of Step S106.

In the example flow above, with respect to the time zone to be displayed, a balloon frame for a preferential program that is scheduled to be broadcasted at a time in the future direction, a balloon frame for a preferential program that is scheduled to be broadcasted at a time in the past direction, a balloon frame for a broadcast-scheduled program, not a preferential program, scheduled to be broadcasted at a time in the future direction, and a balloon frame for a broadcast-scheduled program, not a preferential program, scheduled to be broadcasted at a time in the past direction, are displayed in this order, but the operation of display is not limited to this order.

For example, a balloon frame for a preferential program that is scheduled to be broadcasted at a time in the past direction, a balloon frame for a preferential program that is scheduled to be broadcasted at a time in the future direction, a balloon frame for a broadcast-scheduled program, not a preferential program, scheduled to be broadcasted at a time in the past direction, and a balloon frame for a broadcast-scheduled program, not a preferential program, scheduled to be broadcasted at a time in the future direction, may be displayed in this order.

That is, the order of operations of Steps S110 to S112, Steps S120 to S122, Steps S130 to S132, and Steps S140 to S142, is not limited to that shown in FIGS. 6 to 8.

Also, preferential programs only may be associated with balloon frames, or any broadcast-scheduled program, irrespective of whether it is a preferential program or not, scheduled to be broadcasted at a time closest to the time zone to be displayed in the program table 200, may be associated with a balloon program.

### (6) Operation of Moving Focus in Display Apparatus

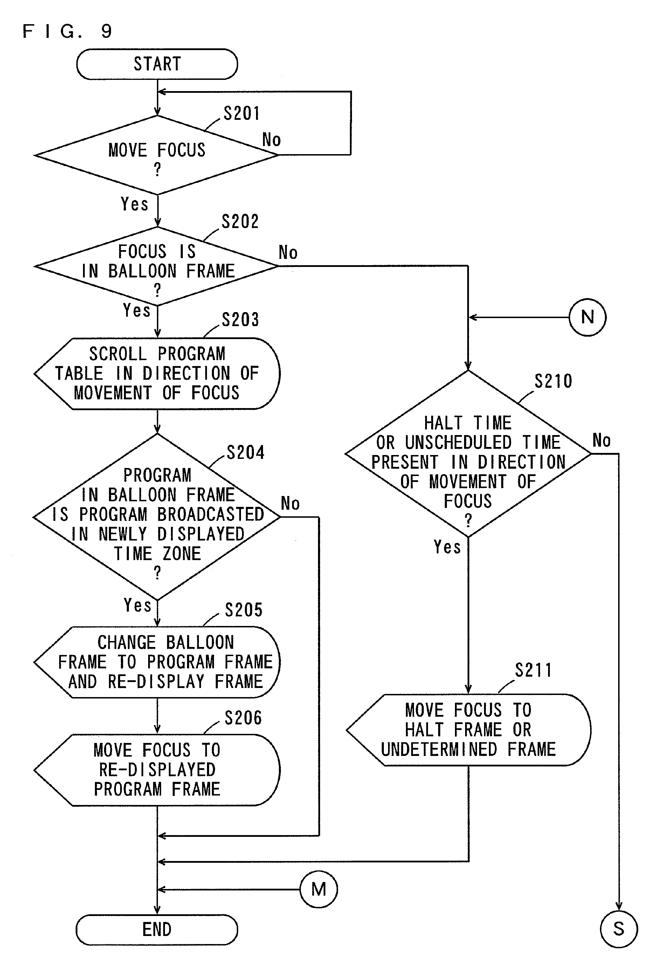

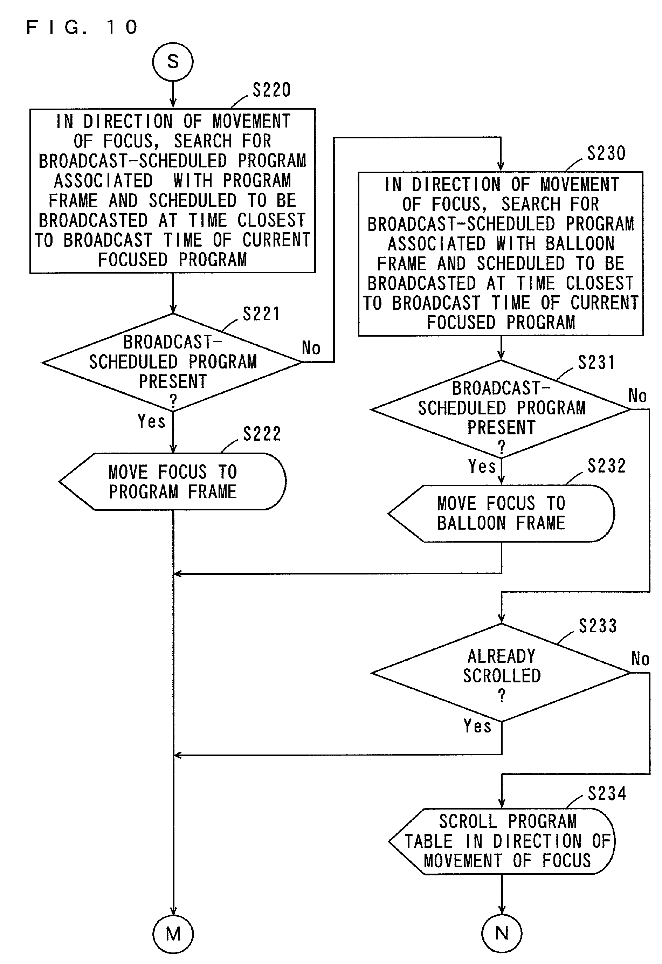

The operation by which the display apparatus 100 of FIG. 1 moves the focus will be illustrated. FIGS. 9 and 10 show a flowchart illustrating a focus moving program by which the display apparatus 100 of FIG. 1 moves the focus. As mentioned earlier, this program is stored in the storage 106m of FIG. 1 as well as the program table display program.

First, the controller 106 of FIG. 1 determines whether it has received a command to move the focus from outside, from a user operating the input device 105 of FIG. 1 (Step S201).

When receiving a command to move the focus, the controller 106 determines whether the focus is currently positioned in a balloon frame in the direction of movement of the focus (Step S202).

When the focus is positioned in a balloon frame, the controller 106 newly determines TV stations to be displayed and a time zone to be displayed, and extracts information about broadcast-scheduled programs from EPG data. Then, on the basis of the extracted information, the receiving apparatus scrolls the program table 200 for a certain time length in the direction of movement of the focus (Step S203).

Next, the controller 106 determines whether the broadcast-scheduled program associated with the balloon frame from which the focus is moved is a program scheduled to be broadcasted in the time zone to be newly displayed by the scrolling (Step S204).

When the broadcast-scheduled program in the balloon frame from which the focus is moved is a program scheduled to be broadcasted in the time zone to be newly displayed, the controller 106 changes the balloon frame of that broadcast-scheduled program to a rectangular program frame, and re-displays it (Step S205). Then, the controller 106 moves the focus to the re-displayed program frame (Step S206). The movement of focus thus ends.

When, in the Step S204, the broadcast-scheduled program of the balloon frame from which the focus is moved is not a program scheduled to be broadcasted in the time zone to be newly displayed, the controller 106 ends the operation of moving the focus, keeping the focus in the balloon frame.

When, in the Step S202, the focus is not positioned in a balloon frame, the controller 106 determines whether there is a time in which broadcasting is halted, or a time in which program scheduling is undetermined, immediately before or after, in the direction of movement of the focus, the time of the program frame where the focus is currently positioned (Step S210).

When there is a broadcast halt time or schedule undetermined time, the controller 106 moves the focus to the halt frame or undetermined frame existing immediately before or after the program frame where the focus is currently positioned (Step S211). The movement of focus thus ends.

When the focus has moved to a halt frame or an undetermined frame, the halt frame or undetermined frame where the focus is positioned may be highlighted, as when the focus is positioned in a normal program frame. Also, instead of highlighting the halt frame or undetermined frame, some pictorial sign may be displayed in part of the program table 200 to indicate that the focus is positioned in a halt frame or an undetermined frame.

When there isn't a broadcast halt time or a program schedule undetermined time, the controller 106 searches for a broadcast-scheduled program that is scheduled to be broadcasted at a time closest to the broadcast time of the current focused program in the direction of movement of the focus, and that is associated with a program frame displayed in the program table 200 (Step S220). Then, the controller 106 determines whether there is a corresponding broadcast-scheduled program (Step S221).

When there is a broadcast-scheduled program, the receiving apparatus moves the focus to the program frame associated with that broadcast-scheduled program (Step S222). The movement of focus thus ends.

When there isn't a broadcast-scheduled program, the receiving apparatus searches for a broadcast-scheduled program that is scheduled to be broadcasted at a time closest to the broadcast time of the current focused program in the direction of movement of the focus, and that is associated with a balloon frame displayed in the program table 200 (Step S230). Then, the controller 106 determines whether there is such a broadcast-scheduled program (Step S231).

When there is a broadcast-scheduled program, the controller 106 moves the focus to the balloon frame associated with that broadcast-scheduled program (Step S232). The movement of focus thus ends.

When there isn't a broadcast-scheduled program, the controller 106 determines whether the program table 200 has been already scrolled (Step S233).

When scrolling has already been carried out, the controller 106 ends the operation without moving the focus.

When scrolling has not been carried out, the controller 106 newly determines TV stations to be displayed and a time zone to be displayed, and extracts information about broadcast-scheduled programs from EPG data. Then, on the basis of the extracted information, the controller 106 scrolls the program table 200 for a certain time length (e.g. one hour) in the direction of movement of the focus (Step S234). After that, the controller 106 performs the above-described operation of Step S210. In the Steps S203 and S234, the certain time may be set to one hour, or e.g. to 0.5 hour or two hours, which can be arbitrarily determined.

Though not described above, when the focus was moved in the program table 200, the focused program display section 202 of FIG. 3 displays detailed information about the broadcast-scheduled program associated with the program frame or balloon frame to which the focus was moved.

### (7) Other Examples of Display of Program Table

### (7-1)

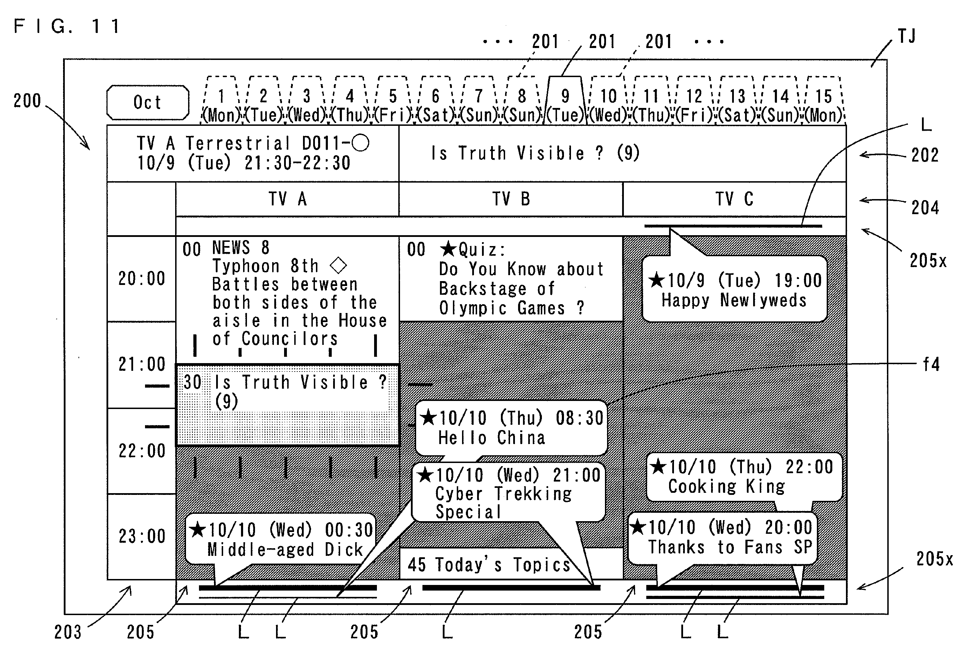

FIG. 11 is a diagram showing another example of the display of the program table 200 displayed in the display 109 of the display apparatus 100 of FIG. 1.

In the program table 200 of FIG. 11, quotation line display sections 205x are displayed above and below the program display sections 205. The quotation line display sections 205x display quotation lines L associated with broadcast-scheduled programs to be displayed in balloon frames, for example.

In this case, for example, the quotation lines L may be displayed with thicknesses corresponding to the lengths of broadcast times of the broadcast-scheduled programs so that the user can visually recognize the broadcast time lengths of the broadcast-scheduled programs.

With the quotation lines L, the quotation line display sections 205x can show a plurality of quotation lines L corresponding to a plurality of broadcast-scheduled programs in the order of broadcast times.

The quotation lines L may be associated with broadcast-scheduled programs that are not displayed in balloon frames. In this case, for example, the number of programs present in a certain period from the time zone displayed in the program table 200 can be indicated with the number of quotation lines L.

In the example of FIG. 11, the balloon frame f4 of "Hello, China", scheduled to be broadcasted from TV station A, is displayed in the program display section 205 for TV station B. In this way, a balloon frame associated with a program scheduled to be broadcasted from one TV station may be displayed in a program display section 205 for another TV station. This enables effective use of undetermined frames on the program table 200.

Also, the example of FIG. 11 shows two balloon frames indicating programs that are scheduled to be broadcasted from TV station A, and that are scheduled to be broadcasted in the future from the displayed time zone. In this way, a plurality of balloon frames indicating future broadcast-scheduled programs may be displayed for one TV station. In this case, the user can check more details of the scheduling of programs broadcasted from a particular TV station.

When a plurality of balloon frames are displayed for one TV station in this way, some of the balloon frames may be displayed in an undetermined frame of another TV station, or, as shown in the program display section 205 for TV station C of FIG. 11, a plurality of balloon programs may be displayed to overlap. Also, though not shown in the example of FIG. 11, a plurality of balloon frames may be displayed in one balloon frame.

Also, though not shown in the example above, when the focus is moved, the state of display of balloon frames may be varied depending on the direction of movement of the focus and the position of the focus, or the number of balloon frames may be increased/ decreased.

For example, a new balloon frame may be displayed as the focus is moved closer to one balloon frame.

Also, as the focus is moved closer to one balloon frame, the information (a character string) displayed in the balloon frame may be varied. Also, predetermined multiple character strings may be sequentially switched in a balloon frame. In this case, multiple broadcast-scheduled programs can be associated with one balloon frame, and multiple pieces of information can be switched and displayed.

### (7-2)

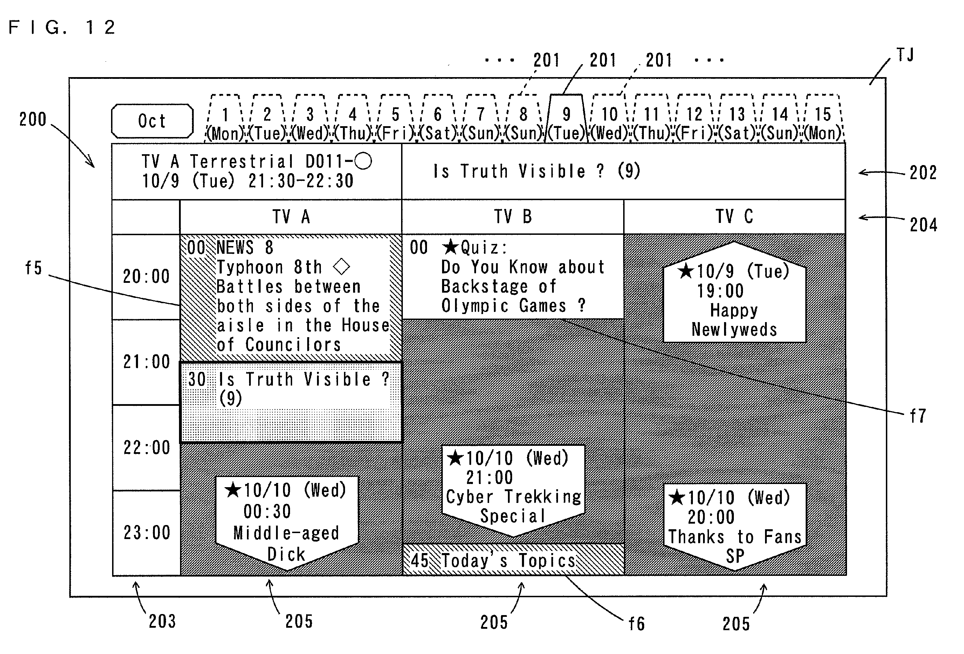

FIG. 12 is a diagram showing still another example of the display of the program table 200 displayed in the display 109 of the display apparatus 100 of FIG. 1.

Among the plurality of program frames of the program table 200 of FIG. 12, a particular background color that is distinguishable from the program frame f7 is set in the two program frames f5 and f6 indicating "News 8" of TV station A and "Today's Topics" of TV station B.

When the background color of program frames associated with continuous programs is displayed in a particular color, the user can easily know, by visually checking the program table 200, whether the programs displayed in program frames are continuous programs or not.

Instead of using a particular background color, the brightness of program frames may be adjusted depending on attributes of the broadcast-scheduled programs. For example, the brightness of program frames of continuous programs is set half the brightness of other program frames. In this case, the user can easily identify continuous programs among multiple broadcast-scheduled programs on the basis of the different brightness levels of program frames.

Information indicating whether broadcast-scheduled programs are continuous programs or not may be sent as program information from the broadcasting station apparatus 20 to the display apparatus 100. Also, the information whether broadcast-scheduled programs are continuous programs or not may be sent to the display apparatus 100 from equipment other than the broadcasting station apparatus 20, e.g. through the Internet.

Also, the controller 106 of the display apparatus 100 may automatically estimate and recognize whether broadcast-scheduled programs are continuous programs or not on the basis of EPG data sent from the broadcasting station apparatus 20.

### (7-3)

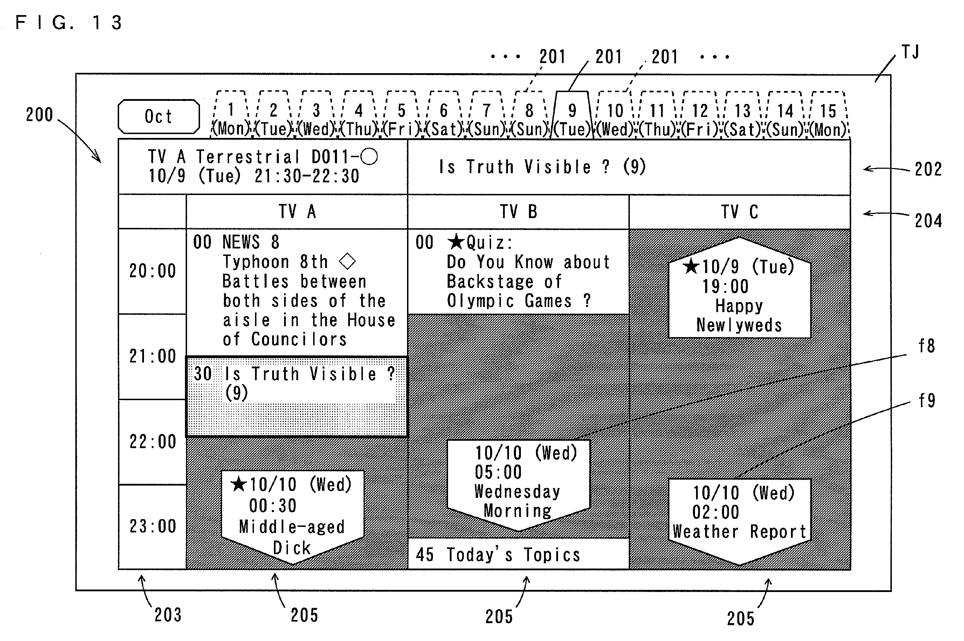

FIG. 13 is a diagram showing still another example of the display of the program table 200 displayed in the display 109 of the display apparatus 100 of FIG. 1.

In the program table 200 of FIG. 13, the program display sections 205 for TV station B and TV station C display balloon frames f8 and f9 associated with broadcast-scheduled programs that are not preferential programs.

### (8) Preferential Programs

As described above, in this embodiment, preferential programs are broadcast-scheduled programs selected by individual TV stations, but preferential programs may be arbitrarily determined by broadcasting stations, by the display apparatus 100 or by a user as broadcast-scheduled programs that satisfy a given condition.

For example, broadcasting stations may extract popular broadcast-scheduled programs on the basis of audience rating and send the information to the display apparatus 100. In this case, the display apparatus 100 can set popular programs as preferential programs. Then, the user can easily recognize popular programs as preferential programs by visually checking the program table 200.

Also, the controller 106 of the display apparatus 100 may monitor what the user views, identify genres that the viewer likes, and set broadcast-scheduled programs of the identified genres as preferential programs; or, among programs that the viewer views, the controller 106 may set some programs that the viewer most frequently views (for example, top three programs) as preferential programs. In this case, by visually checking the program table 200, the user can easily recognize his/her favorite programs as preferential programs.

Also, the user may previously set his/her favorite broadcast-scheduled programs as preferential programs in the display apparatus 100. In this case, by checking the program table 200, the user can easily recognize his/her favorite programs as preferential programs.

### (9) Other Manners to Display Date Tabs

Date tabs as described below may be used in place of the plurality of date tabs 201 shown in FIGS. 3 to 5 and FIGS. 11 to 13.

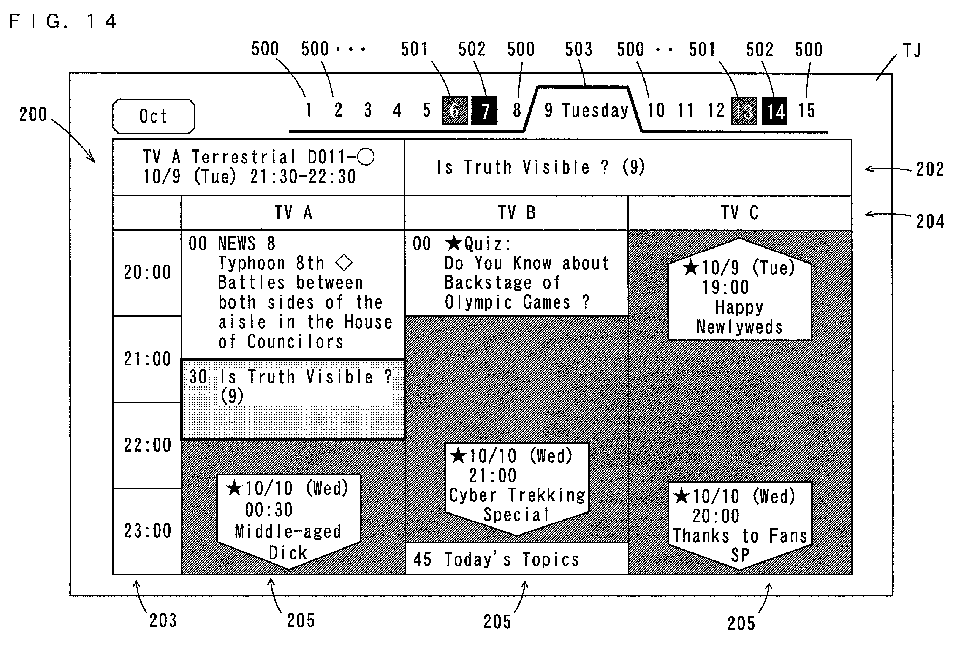

FIG. 14 is a diagram illustrating another manner to display date tabs. As shown in FIG. 14, this example shows four kinds of date tabs 500, 501, 502 and 503 displayed in different manners.

Among the four kinds of date tabs 500 to 503, the date tab 503 selected by the user shows the date and what day of the week it is. On the other hand, date tabs 500 to 502 not selected by the user show the date only, without showing what day of the week it is.

Thus, the total display area of the date tabs 500 to 503 can be made smaller. Also, a large area can be ensured for the display of the date tab 503, while making smaller the display areas of the date tabs 500 to 502, so that the user can clearly see the date that he/she is selecting.

Also, among the four kinds of date tabs 500 to 503, different background colors are set in two kinds of date tabs 501 and 502, and the dates are displayed in an inverted manner.

For example, a blue background color indicating Saturday is set in the date tabs 501. Also, a red background color indicating Sunday is set in the date tabs 502. In this case, by visually checking the background colors of the date tabs 501 and 502, the user can generally know what days of the week the dates of the date tabs 500 to 503 show.

The example above explained that the dates in two kinds of date tabs 501 and 502 are displayed in an inverted manner, but it is not essential to display the dates in the two kinds of date tabs 501 and 502 in an inverted manner.

Also, the example above explained that the date tabs 500 to 502 not selected by the user show the date only, but the date tabs 500 to 502 not selected by the user may show what day of the week it is only.

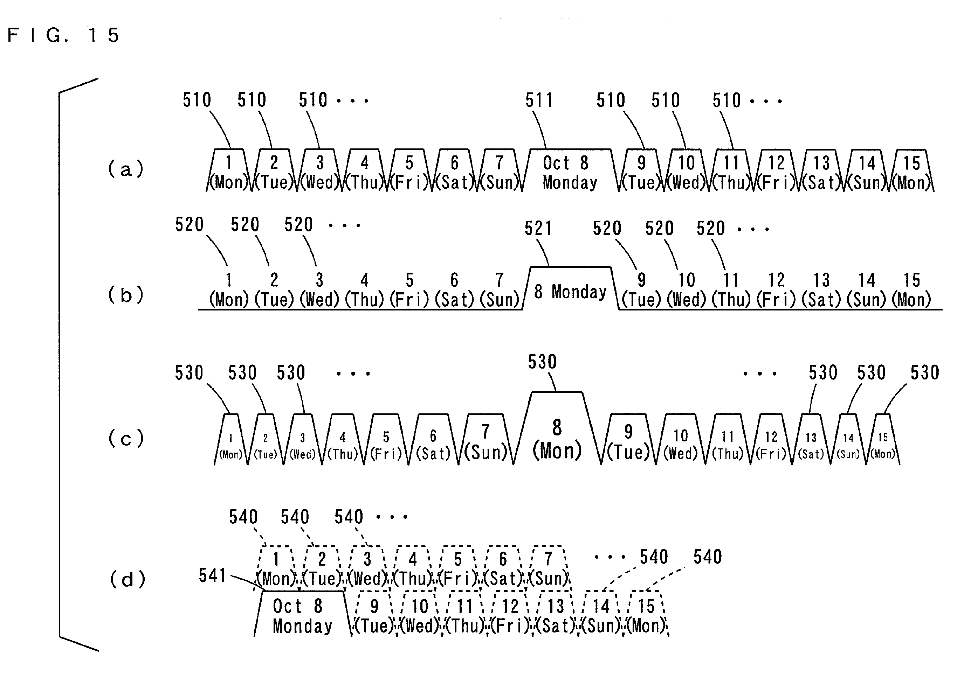

FIG. 15 is a diagram illustrating still other manners to display date tabs. In the example (a) of FIG. 15, two kinds of date tabs 510 and 511 are displayed. Among the two kinds of date tabs 510 and 511, the date tab 511 selected by the user shows month and what day of the week it is, together with the date.

On the other hand, the date tabs 510 not selected by the user show the date and what day of the week it is, but they do not show month. Also, the date tabs 510 show the date and the day of the week in a simplified manner. Specifically, "Wednesday, 3rd" is indicated as "3 (Wed)". This makes smaller the total display area of the date tabs 510 and 511.

Also, the user can easily recognize the currently selected date tab 511 by visually checking the date tabs 510 and 511.

In the example (b) of FIG. 15, two kinds of date tabs 520 and 521 are displayed. Among the two kinds of date tabs 520 and 521, the date tab 521 selected by the user shows what day of the week it is, together with the date. Also, this date tab 521 has a trapezoidal frame. On the other hand, the date tabs 520 not selected by the user show the date and the day of the week in a simplified manner, and they do not have trapezoidal frames. Thus, by visually checking the date tabs 520 and 521, the user can easily recognize the currently selected date tab 521.

In the example (c) of FIG. 15, a plurality of date tabs 530 are displayed. Among the plurality of date tabs 530, the date tab 530 selected by the user has a larger frame and shows the date inside with a larger font, than the frames of the other date tabs 530 and the font of the dates inside. The date tabs 530 other than the selected date tab 530 are displayed smaller as they are separated away from the selected date tab 530.

Thus, the user can easily recognize the currently selected date tab 530 by visually checking the date tabs 530.

In the example (d) of FIG. 15, two kinds of date tabs 540 and 541 are displayed. Among the two kinds of date tabs 540 and 541, the date tab 541 selected by the user shows month and what day of the week it is, together with the date. Also, this date tab 541 has a trapezoidal frame.

On the other hand, the date tabs 540 not selected by the user show the date and day in a simplified manner, and they do not show month. The date tabs 540 have trapezoidal frames with dotted line.

Thus, the user can easily recognize the currently selected date tab 541 by visually checking the date tabs 540 and 541.

Also, in this example, the date tabs 540 and 541 from 1st to 15th are displayed in two rows. This reduces the width of the display area of the date tabs 540 and 541.

The examples above have explained that the date tab selected by the user shows detailed information about the date, but date tabs in the vicinities of the selected date tab may also be configured to show detailed information about the dates. For example, the date tab selected by the user and the date tabs adjacent to that date tab may show the month, date, and day. In this case, date tabs for three days show detailed information about the dates.

Also, with the date tab selected by the user showing the maximum amount of information about the date, the amount of information about the dates shown in individual date tabs may be gradually reduced as the date tabs are separated away from the selected date tab. For example, the selected date tab shows the year, month, date and what day of the week it is, the adjacent date tabs show the month, date and day of the week, and the date tabs adjacent to these date tabs show the date and day of the week.

Also, the date tab selected by the user may be displayed in a large display area, and the display areas of the individual date tabs may be gradually reduced as they are separated from the selected date tab.

Also, date tabs close to the current date when the user views the program table may be configured to show the maximum amount of date information, and the amount of information about dates shown in individual date tabs may be gradually reduced as they are separated from that date tab.

This embodiment has shown examples in which date tabs for 15 days are displayed, but a very large display area is required when date tabs for 30 days or 60 days are displayed, for example. Accordingly, in such a case, date tabs for a given number of days from the date tab selected by the user are displayed, and the date tabs may be scrolled when the user selects a date tab again, for example.

The examples above explained manners to display date tabs used together with program tables, but these manners to display date tabs are applicable not only to program tables but also to display of various kinds of information including dates.

For example, the above-described manners to display date tabs can be used together with information when a program table is one-dimensionally displayed in list form, when reservation information is displayed in list form, when making a log display of communication information, and when displaying accounting information in list form, for example.

### (10) Effects

According to the display apparatus 100 of this embodiment, even when the program table 200 displayed on the television screen TJ contains almost no program frames for firmly broadcast-scheduled programs, a user can visually check balloon frames to easily and certainly recognize broadcast-scheduled programs in a time zone out of the time zone displayed in the time display section 203 of the program table 200.

The description above has explained examples in which the program table 200 displays only a small number of programs that have been firmly scheduled to be broadcasted in the future exceeding about one week from the time of transmission of EPG data, but the present invention can be effectively applied to examples as shown below.

For example, some TV receivers capable of displaying program tables have a function of restricting program frames in the program display sections 205 only to broadcast-scheduled programs of particular genres selected by a user. In such a case, large areas, other than the program frames for the corresponding broadcast-scheduled programs, exist in the program display sections 205. Accordingly, by displaying balloon frames in the areas other than the program frames, the user can easily recognize not only programs scheduled to be broadcasted in the displayed time zone in the program table but also programs scheduled to be broadcasted in time zones other than the displayed time zone.

The display method of this embodiment is not limited to a program table 200 showing programs scheduled to be broadcasted eight or more days after the day of transmission of EPG data; also when a program table 200 indicates programs scheduled to be broadcasted within eight or less days after the day of transmission of EPG data, balloon frames are displayed in the program table 200 when it shows a late-night time zone where there are a large number of halt frames. This allows the user to easily and certainly check the program table 200.

### (11) Other Modifications

In this embodiment, the display apparatus 100 displays a program table 200 for 15 days from the time of transmission of EPG data, but this is not intended to be restrictive; the display apparatus 100 may display a program table 200 for two months or three months or more from the time of transmission of EPG data.

The description above has shown examples of a program table 200 in which broadcast times are shown in the vertical axis direction and a plurality of TV stations are shown in the horizontal axis direction, but the present invention is applicable also to program tables in which a plurality of TV stations are shown in the vertical axis direction and broadcast times are shown in the horizontal axis direction.

### (12) Other Embodiments

In the embodiments above, the controller 106 is realized with a CPU and a program table display program and a focus moving program, but this is not intended to be restrictive; the controller 106 may be realized with hardware such as electronic circuitry.

Also, the drawer 107 may be realized with a CPU and a program, or with hardware such as electronic circuitry.

Similarly, the display synthesizer 108 may be realized with a CPU and a program, or with hardware such as electronic circuitry.

### (13) Correspondences between Elements of Claims and Elements of Embodiments

In the following paragraphs, non-limiting examples of correspondences between various elements recited in the claims below and those described above with respect to various preferred embodiments of the present invention are explained.

In the embodiments described above, the broadcast receiver 102 is an example of a receiver, the time zone displayed in the time display section 203 is an example of a selected time zone, the program information accumulator 104, input device 105, drawer 107, and display synthesizer 108 of FIG. 1 are examples of a program table generator, the time display section 203 is an example of a time axis, the program frames are examples of a first program frame, and the balloon frames are examples of a second program frame.

Also, the date tab 503 of FIG. 14 and the date tabs 511, 521, 530 and 541 of FIG. 15 are examples of a date display frame displayed in a first display manner, and the date tabs 500 to 502 of FIG. 14 and the date tabs 510, 520, 530, 540, and 201 of FIG. 15 are examples of a date display frame displayed in a second display manner. Also, the controller 106 of FIG. 1 is an example of a processing device, and the program table display program is an example of a display program.

Various other elements having configurations or functions described in the claims can also be used as various elements in the claims.

### [Industrial Applicability]

The present invention is effectively applicable to broadcasting systems such as TV broadcasting, broadcasting station apparatuses, receivers, and broadcasting methods.

## Claims

1. A display apparatus comprising:
a receiver that receives a broadcast signal and extracts program scheduling information from the received broadcast signal;
a program table generator that generates a program table in a selected time zone selected by a user, on the basis of the program scheduling information extracted by said receiver;
a display that displays the program table generated by said program table generator; and
a controller that controls said program table generator,
said program table including a time axis indicating broadcast schedule time and a program display section that displays, along said time axis, program frames indicating information about broadcast-scheduled programs on the basis of said broadcast schedule time,
said controller controlling said program table generator such that, on the basis of said program scheduling information, a program frame indicating a broadcast-scheduled program firmly scheduled in said selected time zone is displayed as a first program frame in said program display section, said controller determining on the basis of said program scheduling information whether there is an empty display region where said first program frame is absent in said program display section, and when there is said empty display region, said controller controlling said program table generator such that a program frame indicating a broadcast-scheduled program firmly scheduled in a time zone out of said selected time zone is displayed as a second program frame in said empty display region.

2. The display apparatus according to claim 1, wherein said controller determines that there is the empty display region in said program display section when, on the basis of said program scheduling information, a region where said first program frame is absent continues for a given length or longer along said time axis in said selected time zone.

3. The display apparatus according to claim 1, wherein, among broadcast-scheduled programs firmly scheduled in the time zone out of said selected time zone, said controller controls said program table generator such that a second program frame indicating a broadcast-scheduled program at a time closest to said selected time zone is preferentially displayed in said empty display region.

4. The display apparatus according to claim 1, wherein what broadcast-scheduled program is to be indicated as the second program frame in said program display section is determined on the basis of a predetermined condition.

5. The display apparatus according to claim 4, wherein said predetermined condition is that the broadcast-scheduled program was previously selected by a broadcasting station, or that the broadcast-scheduled program is included in a genre previously set by a user, or that the broadcast-scheduled program was determined on the basis of a frequency of viewing of a user.

6. The display apparatus according to claim 1,
wherein said controller controls said program table generator such that a plurality of date display frames are generated to indicate information about dates of said program table, and such that said generated date display frames are displayed in said display in a user-selectable manner, and said controller controls said program table generator such that a program table corresponding to the date of a date display frame selected by the user is displayed in said display,
each date display frame is displayed in a first display manner when selected by the user, and is displayed in a second display manner when not selected by the user, and
a display area of a date display frame displayed in said first display manner is larger than a display area of a date display frame displayed in said second display manner.

7. The display apparatus according to claim 6, wherein the amount of information about the date indicated in a date display frame in said first display manner is larger than the amount of information about the date indicated in a date display frame in said second display manner.

8. The display apparatus according to claim 6,
wherein information about the date indicated in each date display frame is displayed with a character string, and
the character string indicated in a date display frame in said first display manner is displayed with a font that is larger than a font of the character string indicated in a date display frame in said second display manner.

9. A display method of displaying a program table in a display, comprising the steps of:
receiving a broadcast signal and extracting program scheduling information from the received broadcast signal;
generating a program table in a selected time zone selected by a user, on the basis of the extracted program scheduling information; and
displaying the generated program table in said display,
said program table including a time axis indicating broadcast schedule time and a program display section that displays, along said time axis, program frames indicating information about broadcast-scheduled programs on the basis of said broadcast schedule time,
said step of generating said program table comprising the steps of:
on the basis of said program scheduling information, displaying a program frame indicating a broadcast-scheduled program firmly scheduled in said selected time zone, as a first program frame in said program display section;
determining on the basis of said program scheduling information whether there is an empty display region where said first program frame is absent in said program display section; and
when there is said empty display region, displaying a program frame indicating a broadcast-scheduled program firmly scheduled in a time zone out of said selected time zone, as a second program frame in said empty display region.

10. The display method according to claim 9, wherein said step of generating said program table comprises the steps of:
generating a plurality of date display frames to indicate information about dates of said program table, and displaying said generated date display frames in a user-selectable manner, and displaying a program table corresponding to the date of a date display frame selected by the user in said display;
displaying the date display frame selected by the user in a first display manner in said display; and
displaying a date display frame not selected by the user in a second display manner in said display,
and wherein a display area of the date display frame displayed in said first display manner is larger than a display area of the date display frame displayed in said second display manner.

11. A display program that can be executed by a processing device to display a program table in a display, comprising the processes of:
receiving a broadcast signal and extracting program scheduling information from the received broadcast signal;
generating a program table in a selected time zone selected by a user, on the basis of the extracted program scheduling information; and
displaying the generated program table in said display,
said program table including a time axis indicating broadcast schedule time and a program display section that displays, along said time axis, program frames indicating information about broadcast-scheduled programs on the basis of said broadcast schedule time,
said process of generating said program table causing said processing device to perform the processes of:
on the basis of said program scheduling information, displaying a program frame indicating a broadcast-scheduled program firmly scheduled in said selected time zone, as a first program frame in said program display section;
determining on the basis of said program scheduling information whether there is an empty display region where said first program frame is absent in said program display section; and
when there is said empty display region, displaying a program frame indicating a broadcast-scheduled program firmly scheduled in a time zone out of said selected time zone, as a second program frame in said empty display region.

12. The display program according to claim 11, wherein said process of generating said program table comprises the processes of:
generating a plurality of date display frames to indicate information about dates of said program table, and displaying said generated date display frames in a user-selectable manner, and displaying a program table corresponding to the date of a date display frame selected by the user in said display;
displaying the date display frame selected by the user in a first display manner in said display; and
displaying a date display frame not selected by the user in a second display manner in said display,
and wherein a display area of the date display frame displayed in said first display manner is larger than a display area of the date display frame displayed in said second display manner.
